# EUROPEAN PATENT SPECIFICATION

(11) **EP 3 455 129 B1**
(45) Date of publication and mention of the grant of the patent: **06.04.2022**
(21) Application number: 17908671.5
(22) Date of filing: 05.05.2017
(51) Int. Cl.: B64C 27/14, B64C 1/30, B64C 39/02

(54) **SYSTEMS AND METHODS RELATED TO TRANSFORMABLE UNMANNED AERIAL VEHICLES**
SYSTEME UND VERFAHREN IM ZUSAMMENHANG MIT UMWANDELBAREN UNBEMANNTEN LUFTFAHRZEUGEN
SYSTÈMES ET PROCÉDÉS SE RAPPORTANT À DES AÉRONEFS SANS PILOTE TRANSFORMABLES

(43) Date of publication of application: 20.03.2019
(73) Proprietor: SZ DJI Technology Co., Ltd., Shenzhen, Guangdong 518057 (CN)
(72) Inventor: LIAO, Ran, Shenzhen Guangdong 518057 (CN)
(74) Representative: Appelt, Christian W.
(86) International application number: PCT/CN2017/083132
(87) International publication number: WO 2018/201416

(56) References cited:
- WO-A1-2014/108026
- CN-A- 106 379 515
- CN-A- 106 542 085
- CN-U- 204 750 552
- CN-U- 205 010 472
- CN-U- 205 499 326
- CN-U- 205 872 439
- CN-U- 206 107 569
- CN-U- 206 141 826
- US-A- 6 164 590
- US-A1- 2012 234 968
- US-A1- 2016 159 471

## Description

### BACKGROUND

An unmanned vehicle such as an unmanned aerial vehicle (UAV) can be used for various applications, such as performing surveillance, reconnaissance, and exploration tasks in a wide variety of environments for military and civilian applications. The UAV may be stored and transported to a designated area prior to being deployed for one or more such applications. For example, the UAV may be in an inactive state, such as a powered-off state, during transport. The UAV may then assume an active state, such as a powered-on state and/or flight, after being delivered to a target destination.

CN 204 750 552 U describes a pair of horn support and unmanned vehicles, wherein, the horn support includes: pivot support, horn pivot and elastic element, the horn pivot with pivot rotate bracket connection, the horn pivot is used for supporting the horn and winds the horn pivot is rotated, the pivot support with be provided with the fixture block and the draw -in groove of block each other in the horn pivot, elastic element sets up on the pivot support and with a terminal surface butt of horn pivot is with control the fixture block with draw -in groove block or separation.

WO 2014/108026 A1 describes a transformable aerial vehicle and a control method thereof. The transformable aerial vehicle includes: a central body and at least two transformable frame assemblies respectively disposed on the central body, each of the at least two transformable frame assemblies having a proximal portion pivotally coupled to the central body and a distal portion; an actuation assembly mounted on the central body and configured to pivot the at least two transformable frame assemblies to a plurality of different vertical angles relative to the central body; and a plurality of propulsion units mounted on the at least two transformable frame assemblies and operable to move the transformable aerial vehicle.

US 2016/159471 A1 describes a reconfigurable unmanned aircraft system. A system and method for configuring a reconfigurable unmanned aircraft and system and method for operation and management of a reconfigurable unmanned aircraft in an airspace are also described. The aircraft is selectively reconfigurable to modify flight characteristics. The aircraft comprises a set of rotors. The position of at least one rotor relative to the base can be modified by at least one of translation of the rotor relative to the boom, pivoting of the boom relative to the base, and translation of the boom relative to the base; so that flight characteristics can be modified by configuration of position of at least one rotor relative to the base. A method of configuring an aircraft having a set of rotors on a mission to carry a payload comprises the steps of determining properties of the payload including at least mass properties, determining the manner in which the payload will be coupled to the aircraft, determining configuration for each of the rotors in the set of rotors at least partially in consideration of the properties of the payload, and positioning the set of rotors in the configuration for the aircraft to perform the mission.

US 6 164 590 A describes a variable bodied helicopter. The helicopter is of a type that has tandem lifting rotors with a body consisting of a front section and a rear section. The rear section of the body is narrower than the front section of the body, thereby allowing the rear section to travel into the front section. Channelled railings attached to the front section of the body firmly hold the rear section through railings attached to the rear section. These railings guide the movement of the rear section relative to the front section. A shaft consisting of two sections is used to synchronize the tandem arranged rotors. The narrower section of the shaft slides into the wider section of the shaft when the rear section of the body moves into the front section of the body. Bearings support the synchronizing shaft. One bearing is firmly fixed to the front section of the body while another bearing is attached to the rear section but is linked to the front section thus causing it to move against the rear section when the rear section moves relative to the front section. Another bearing positioned on the rear section is linked by a telescopic connection to the front section of the body so that it is placed at the optimum position on the rear section as the body expands from a compressed state.

### SUMMARY

The present invention relates to an unmanned aerial vehicle according to independent claim 1 and to a method of operating an unmanned aerial vehicle according to independent claim 8. Preferred embodiments are described in the dependent claims. Described herein are systems and methods related to transforming the configuration of an unmanned aerial vehicle (UAV). The central body of the UAV is configured to transform between a first configuration and a second configuration. The UAV may be in the first configuration, such as a space-saving configuration, in a non-operation mode, for example during transport and/or storage of the UAV. The UAV may be in the second configuration, such as an expanded configuration, during the operation mode, such as during flight. An UAV which can assume a configuration with a compact size and/or reduced footprint while not in operation, such as during transport and/or storage, may be advantageous. The smaller size while in a non-operation mode may enable reduced costs of delivery of the UAV to desired destinations where the UAV may then be powered on for operation. For example, the UAV can be transported to a target site where the UAV may be put into flight to perform the desired task.

In one aspect of the invention, an unmanned aerial vehicle (UAV) comprises the features as defined by independent claim 1.

In some embodiments, the unmanned aerial vehicle (UAV) further comprises the features as defined by dependent claims 2-7.

In one aspect of the invention, a method of operating an unmanned aerial vehicle (UAV) is as defined by independent claim 8.

In some embodiments, the method further comprises the features as defined by claim 9.

Additional aspects and advantages of the present invention will become readily apparent to those skilled in this art from the following detailed description, wherein only exemplary embodiments of the present invention are shown and described, simply by way of illustration of the best mode contemplated for carrying out the present invention, the scope of which is defined by the appended claims. Accordingly, the drawings and description are to be regarded as illustrative in nature, and not as restrictive.

### BRIEF DESCRIPTION OF THE DRAWINGS

A better understanding of the features and advantages of the present invention will be obtained by reference to the following detailed description that sets forth illustrative embodiments, in which the principles of the invention are utilized, and the accompanying drawings of which:
FIG. 1 shows schematic diagrams of an example of a UAV in a first configuration and a second configuration, respectively.
FIG. 2 shows schematic diagrams of an example of a UAV in a first configuration.
FIG. 3 shows schematic diagrams of the UAV of FIG. 2 in a second configuration.
FIG. 4 shows schematic diagrams of the UAV of FIG. 2 in the second configuration and comprising one or more additional functional modules.
FIG. 5 shows schematic diagrams of an example of a UAV in a first configuration.
FIG. 6 shows schematic diagrams of the UAV of FIG. 5 in a second configuration.
FIG. 7 shows schematic diagrams of an example of a UAV in a first configuration.
FIG. 8 shows schematic diagrams of the UAV of FIG. 7 in a second configuration.
FIG. 9 shows schematic diagrams of an example of a UAV not according to the appended claims.
FIG. 10 shows schematic diagrams of another example of a UAV.
FIG. 11 shows schematic diagrams of yet another example of a UAV not according to the appended claims. in a first configuration.
FIG. 12 shows are schematic diagrams of the UAV not according to the appended claims of FIG. 11 in a second configuration.
FIG. 13 shows schematic diagrams of an example of a central body in a first configuration.
FIG. 14 shows schematic diagrams of the central body of FIG. 13 in a second configuration.
FIG. 15 shows schematic diagrams of an example of a central body.
FIG. 16 shows schematic diagrams of an example of a transformable arm in a first configuration.
FIG. 17 shows schematic diagrams of the transformable arm of FIG. 16 in a second configuration.
FIG. 18 is a schematic diagram of an example of a movable object including a carrier and a payload.
FIG. 19 is a schematic diagram of an example of a system for controlling a movable object.

### DETAILED DESCRIPTION

While some embodiments of the invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention.

Described herein are systems and methods related to transforming the configuration of a movable object. The movable object is an unmanned aerial vehicle (UAV). In examples not according to the appended claims, any description herein of a UAV may also apply to any type of movable object, unmanned vehicle and/or aerial vehicle. The UAV may be a multirotor aircraft, including a tricopter, quadcopter, hexacopter and/or octocopter. The UAV can include a central body comprising a plurality of arms extending therefrom. One or more propulsion units may be coupled to each of the plurality of arms to generate lift for the UAV. The central body of the UAV is configured to transform between a first configuration and a second configuration. Described herein are also UAVs in intermediate phases between the first and second configurations, such as intermediate phases during transformations between the first and second configurations.

The UAV may be in the first configuration while not in operation and in the second configuration during operation. For example, the UAV may be in a space-saving configuration when in a non-operation mode, such as during transport and/or storage of the UAV. The UAV may be in the space-saving configuration when powered-off. The space-saving configuration may be more compact and/or occupy a reduced footprint relative to the configuration of the UAV during an operation mode to reduced space used to transport and/or store the UAV. In some embodiments, the UAV may be in an expanded configuration during the operation mode, such as during flight. In some embodiments, the UAV may be in the expanded configuration while powered-on. The UAV may be configured for flight in the expanded configuration, for example its various components in desired positions to facilitate flight of the UAV.

The UAV comprises a central body comprising a plurality of central body portions, one or more of which being configured to move relative to one or more of the other of the plurality of central body portions to transform the UAV between the first configuration and the second configuration. The central body comprises a first central body portion and a second central body portion one or both of which can be configured to move relative to the other to effect transformation of the central body between the first configuration and the second configuration. The first central body portion or the second central body portion are configured to move relative to the other transform the central body between the first and second configurations. The first and second central body portions move relative to the other to transform the central body. In some embodiments, the central body may comprise more than two central body portions, including three, four, five, six, or more portions, one or more of which can move relative to one or more other of the central body portions to transform the central body. Each of the plurality of central body portions can be discrete and separable portions. For example, one or more of a plurality of central body portions can be separated from and moved relative to one or more of the other central body portions, to transform the central body between the first and second configurations. One or more of the plurality of central body portions can be moved relative to one or more of the other central body portions such that the center of mass of the one or more of the plurality of central body portions can move relative to that of the one or more other central body portions.

In some embodiments, one or more of the plurality of central body portions can be a discrete portion configured to enclose or substantially enclose therein an internal space for receiving one or more electronic components for operating the UAV. For example, each of the plurality of central body portions can be configured to provide therein a respective internal space, and one or more electronic components for operating the UAV can be received in the internal space. As described herein, in some embodiments, one or more of the central body portions can comprise one or more electrical interfaces to facilitate communication between electronic components received in the respective internal cavities of each central body portion.

One more of a plurality of central body portions are translationally displaced relative to one or more other of the plurality of central body portions to transform the central body portion between the first and second configurations. One or more of the plurality of central body portions can maintain its orientation during and after the transformation. For example, the one or more central body portions may not rotate during the transformation such that the orientation of the one or more central body portions is the same before and after the transformation. In some embodiments, one or more of the plurality of central body portions can be both translationally and rotationally displaced relative to one or more of the other central body portions. For example, respective portions of a first and a second central body portion may be translationally and rotationally displaced relative to one another during and/or after the transformation.

In some embodiments, transforming between the first and second configurations comprises laterally and/or vertically displacing one or more of the plurality of central body portions relative to one or more other central body portions to transform the central body between the first and second configurations. For example, one or more central body portions may move horizontally toward or away from another central body portion during the transformation, such as along one or more of a pitch and a roll axis of the UAV. One or more central body portions may move up or down during the transformation, such as along a yaw axis of the UAV. In some embodiments, all portions of one or more of the plurality of central body portions can remain in the same or substantially the same respective planes during and/or after the transformation. For example, the center of mass of one or more of the plurality of central body portions can remain in the same or substantially the same plane during and/or after the transformation. In some embodiments, one or more of the plurality of central body portions can move up or down during the transformation. For example, the center of mass of one or more of the plurality of central body portions can be vertically displaced during and/or after the transformation.

In some embodiments, one or more of a plurality of central body portions can move along a path comprising a linear or substantially linear portion to transform the central body between the first configuration and the second configurations. In some embodiments, the path is linear or substantially linear. In some embodiments, one or more of the plurality of central body portion can move along a linear and curved path, including a linear and an arc-shaped path, to transform the central body. Transforming the central body comprises translationally displacing one or more of a first central body portion and a second central body portion relative to the other and, in some embodiments, moving one or more of the first central body portion and the second central body portion along a curved path, such as an arc-shaped, path. In some embodiments, moving one or more of the first central body portion and the second central body portion along a linear path transforms the central body from the first configuration to the second configuration, or vice versa. In some embodiments, moving one or more of the first central body portion and the second central body portion along an S-shaped path transforms the central body from the first configuration to the second configuration, or vice versa. One or more of the first central body portion and the second central body portion may move along one or more of a roll axis, pitch axis and yaw axis of the UAV to transform the UAV between the first configuration and second configuration. One or more of the first central body portion and the second central body portion may move along and rotate around one or more of a roll axis, pitch axis and yaw axis of the UAV to transform the UAV between the first configuration and second configuration. A UAV can include one or more transformable arms extending from its central body. The transformable arms can be configured to transform between a first configuration and a second configuration. For example, the transformable arms can transform between a space-saving configuration and an expanded configuration. The space-saving configuration may be more compact and/or occupy a reduced footprint relative to the expanded configuration to reduced space used to transport and/or store the UAV. The transformable arms may be in the space-saving configuration during a non-operation mode, such as during transport and/or storage of the UAV. The transformable arms may be in the space-saving configuration when the UAV is not in flight, including when the UAV is powered-off. In some embodiments, the transformable arms may be in the expanded configuration during the operation mode, such as while the UAV is in flight. In some embodiments, the transformable arms may be in the expanded configuration while powered-on. The transformable arms may be configured for flight in the expanded configuration, for example its various components in desired positions to facilitate flight of the UAV. One or more UAVs described herein may comprise one or more of the transformable arms. For example, a UAV comprising a transformable central body may comprise a plurality of transformable arms extending therefrom.

A transformable arm may comprise a first arm portion and a second arm portion, where one or more of the first arm portion and the second arm portion are configured to move translationally relative to the second arm portion to transform the arm between a first configuration and a second configuration. For example, the transformable arm can have a longer length in the expanded configuration than in the space-saving configuration. One or more of the first arm portion and second arm portion can be moved relative to the other along a path parallel or substantially parallel to the length of the transformable arm to transform the transformable arm between the first and second configurations. The first arm portion may support a first propulsion unit, such as at a distal portion distal from the central body, and the second arm may support a second propulsion unit, such as at a distal portion distal from the central body. Each of the propulsion units may comprise a rotor coupled to a set of rotor blades. In the first configuration, the first arm portion may be disposed over the second arm portion such that the first propulsion unit is disposed over and oriented in a direction opposite that of the second propulsion unit. For example, the first arm portion may be disposed over and in alignment with the second arm portion. One or more of the first arm portion and the second arm portion can move translationally relative to the other to transform the arm between the first configuration and the second configuration. For example, in the second configuration, the first arm portion and the second arm portion can be translationally displaced from one another such that the first propulsion unit supported on the distal portion of the first arm portion is not disposed over the second propulsion unit supported on the distal portion of the second arm portion. The first arm portion and the second arm portion can be positioned relative to one another in the second configuration to facilitate operation of the UAV, such as to enable the UAV to fly.

The UAV comprises a plurality of arms according to claim 1. The one or more arms may maintain the same configuration while a central body of the UAV transforms between a first configuration and a second configuration. For example, a UAV may comprise a plurality of arms which do not transform while a central body of the UAV transforms between a first configuration and a second configuration. In some embodiments, each of the plurality of arms can be integrally formed with a corresponding portion of the central body.

It will be noted that while the UAVs herein are described with reference to a first central body portion and a second central body portion, a UAV may comprise more than two central body portions. Although UAVs described herein are described as having a quadrilateral shape, it will be understood that the description may apply to UAVs having another shape.

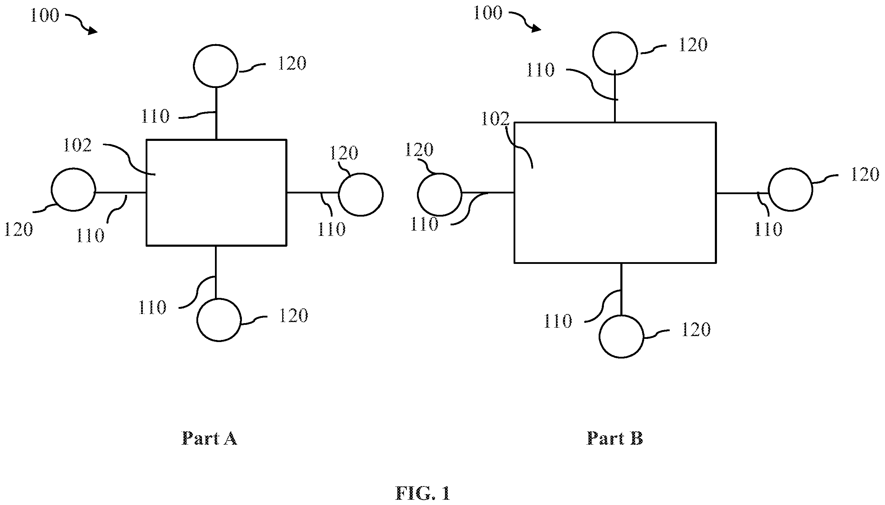

FIG. 1shows schematic diagrams of a UAV 100. Part A shows the UAV in a first configuration and Part B shows the UAV in a second configuration. In some embodiments, the first configuration can be a space-saving configuration. In some embodiments, the second configuration can be an expanded configuration. The expanded configuration can be less compact and/or have a larger footprint than the space-saving configuration. As described herein, the space-saving configuration can facilitate storage and/or transport of the UAV. The expanded configuration can be suited for operation of the UAV, such as for flight. The UAV may not be configured for flight in the space-saving configuration. For example, the UAV may not be capable of flying when in the space-saving configuration, for example because the UAV is configured to be powered-off in the space-saving configuration. The UAV may include one or more safety mechanisms to prevent flight while the UAV is in the space-saving configuration. For example, the UAV may include one or more safety mechanisms to prevent the UAV from inadvertently assuming the expanded configuration, and/or powering on. In some embodiments, the UAV may not begin flight until the UAV is in the expanded configuration.

The UAV 100 comprises a central body 102 and a plurality of arms 110 extending therefrom. Each of the plurality of arms supports a respective propulsion unit 120. A propulsion unit is configured to generate lift and may be supported on a distal portion of an arm distal from the central body. The central body comprises a plurality of central body portions, one or more of which is configured to move to transform the central body between the first configuration and the second configuration. In some embodiments, one or more of the plurality of arms can be configured to transform between a first configuration and a second configuration. As described in further details herein, an arm can comprise a plurality of arm portions, one or more of which can be configured to move relative to the other to transform the arm between a first and second configuration.

In some embodiments, the UAV 100 in the space-saving configuration can have a dimension smaller than a corresponding dimension in the expanded configuration. The dimension in the space-saving configuration may be up to about 50% shorter than a corresponding dimension in the expanded configuration, including up to about 40%, up to about 30%, up to about 20%, up to about 10%, about 5% to about 50%, about 10% to about 50%, about 20% to about 50%, about 30% to about 50%, or about 40% to about 50% shorter. In some embodiments, the dimension may be a length of the central body 102, such as a dimension extending along a direction parallel or substantially parallel to a roll axis of the UAV. In some embodiments, the dimension may be a width of the central body, such as a dimension extending along a direction parallel or substantially parallel to a pitch axis of the UAV. For example, a footprint of the UAV may increase from the space-saving configuration to the expanded configuration due to an increase in a width and/or a length of the central body. In some embodiments, a height of the central body, such a dimension extending along a direction parallel or substantially parallel to a yaw axis of the UAV, can be the same during and/or after the transformation. For example, a height of the central body may be the same or substantially the same in the space-saving and expanded configurations, while a length and/or a width of the central body is larger in the expanded configuration than in the space-saving configuration. In some embodiments, a height of the central body can be smaller in the expanded configuration than in the space-saving configuration. For example, a height of the central body can decrease in a transformation from a space-saving configuration to an expanded configuration, while a length and/or a width of the central body increases.

In some embodiments, the UAV 100 may comprise one or more locking mechanisms to facilitate maintaining the plurality of central body portions in desired positions in the first and/or second configurations. The locking mechanisms may comprise one or more of a latching mechanism, a socket and plug mechanism and an electromagnetic coupling mechanism. For example, the central body 102 may comprise a first central body portion comprising a first portion of a locking mechanism and a second central body portion comprising a second corresponding portion of the locking mechanism. In some embodiments, each of the plurality of central body portions can comprise a respective portion of one or more locking mechanisms. In some embodiments, the UAV 100 may comprise one or more guide features to guide movement of one or more of the plurality of central body portions relative to another of the central body portions. The guide features may comprise one or more mechanisms to couple a first central body portion to a second central body portion while allowing movement of one or more of the first central body portion and the second central body portion relative to the other, such as sliding movement. In some embodiments, the guide features may comprise a protrusion extending from a first surface of a first central body portion and a corresponding recess on a corresponding surface of a second central body portion. For example, a first central body portion may comprise a rail feature on a first central body portion and a corresponding recess on a second central body portion to mate with the rail feature such that one or more of the first central body portion and the second central body portion can slideably move relative to the other while guided by the mating between the rail and the recess. In some embodiments, the guide feature may comprise one or more of a tongue and groove connector and a slideable hinge connector.

Translationally displacing one or more of the plurality of central body portions relative to another of the central body portions can transform the central body 102 between the first and second configurations. Translational displacement of one or more of the plurality of central body portions relative to another of the central body portions to transform the central body between the first and second configurations can comprise moving the one or more central body portions along one or more of a linear path and a curved path. In some embodiments, one or more of the plurality of central body portions can move along one or more of a linear path, and a linear and curved path. In some embodiments, one or more of the plurality of central body portions can move along a linear and arc-shaped path. In some embodiments, one or more of the plurality of central body portions can move along an S-shaped path. One or more of the plurality of central body portions can be moved toward or away from another of the central body portions to transform the central body 102 between the first and second configurations. As described in further details herein, one or more of the plurality of central body portions may move along a vertical direction and/or a horizontal direction to transform the central body between the first and second configurations.

In some embodiments, one or more of the plurality of central body portions of the central body 102 can maintain the same orientation during and/or after transforming between the first and second configurations. In some embodiments, the one or more central body portions can have the same or substantially the same orientation before and after the transformation. For example, the one or more central body portions can change orientations during the transformation while having the same orientation before and after the transformation (e.g. moving along a path comprising a curvature to be translationally displaced relative to a previous position). In some embodiments, the one or more central body portions can have different orientations during and/or after the transformation.

In some embodiments, the UAV 100 in the second configuration can comprise one or more additional storage spaces not present in the first configuration. In some embodiments, the central body 102 can comprise one or more additional storage spaces in the second configuration, the one or more additional storage spaces being at least partially defined by one or more surfaces of one or more central body portions of the UAV. For example, a surface not exposed in the first configuration may be exposed in the second configuration. An additional storage space may be defined at least in part by one or more such surfaces. One or more functional modules may be received in the additional storage space. For example, a functional module may be coupled to one or more surfaces of the central body exposed in the second configuration that is not exposed in the first configuration.

In some embodiments, a functional module comprises one or more sensors. For example, the one or more sensors may comprise one or more of a gyroscope, inertial measurement unit (IMU), mass sensor, accelerometer, magnetometer, global positioning system (GPS) receiver, combinations thereof, and/or the like. In some embodiments, the functional module comprises an energy source, such as a battery. The battery may be an auxiliary battery configured to provide backup energy, and/or an additional energy source. In some embodiments, the battery may be the primary energy source.

In some embodiments, initiating and/or completing the transformation process can initiate performance of a function by the UAV 100. In some embodiments, performance of the function can occur during the transformation process. The transformation process as described herein can refer to transforming a central body 102 of the UAV and one or more of the plurality of arms 110 of the UAV. The function may comprise powering-on of the UAV to provide a UAV in the powered-on state or powering-off of the UAV to provide a UAV in the powered-off state. In some embodiments, the function may comprise initiating one or more components of the UAV. In some embodiments, one or more propulsion units 120 of the UAV may be initiated and/or powered on in response to initiating, performing and/or completing the transformation. In some embodiments, one or more electronic components may be initiated and/or powered on in response to initiating, performing and/or completing the transformation, such as initiating a controller of the UAV. In some embodiments, completing one or more steps of the transformation process can trigger performance of a function. In some embodiments, movement of one or more of the plurality of central body portions relative to another of the central body portions, and/or one or more of an arm portion of an arm relative to another portion of the arm, can trigger performance of a function.

In some embodiments, performance of a function may trigger initiation of a transformation process. For example, a transformation process may be automatically performed in response to initiation and/or completion of a function. In some embodiments, powering on or powering off of the UAV 100 can trigger a transformation process. For example, powering on of the UAV can trigger transformation of the UAV to an expanded configuration, such as transforming the central body 102 and/or one or more of the arms 110. Powering off of the UAV can trigger transformation of the UAV to a space-saving configuration, such as transforming the central body and/or one or more of the arms. In some embodiments, initiating one or more components of the UAV may trigger the transformation process. For example, initiating one or more of the propulsion units 120 of the UAV for operation can trigger transformation of the UAV. In some embodiments, stopping of operation of one or more of the propulsion units can trigger transformation of the UAV from an expanded configuration to a space-saving configuration. For example, transformation of the UAV to the space-saving configuration may begin after the propulsion units have stopped operation, such as after the rotor blades of the propulsion units have stopped rotating. In some embodiments, initiating one or more of the electronic components may trigger a transformation, such as initiating one or more electronic components housed within one or more of the central body portions.

In some embodiments, initiation of the transformation process can be triggered by user instruction. For example, a user may provide input to instruct the UAV 100 to perform the transformation. The input may be received via an input interface feature (*e.g*., a push-button, switch, motion sensor and/or contact sensor) on the UAV, such as on the central body 102 and/or one or more arms 110. The input may be received via a remote control. For example, a user may remotely input an instruction to transform the UAV in order to initiate the transformation process. In some embodiments, manual movement of one or more of the plurality of central body portions relative another of the plurality of central body portions, and/or one or more arm portions of an arm, can trigger performance of the transformation process. For example, a user may move a first central body portion relative to a second central body portion, and in response, the UAV may initiate and/or continue the transformation process.

In some embodiments, the UAV 100 can comprise one or more controllers configured to generate an instruction signal to transform the UAV in response to one or more detected conditions. Conditions may be detected by one or more sensors of the UAV. In some embodiments, conditions can include one or more of an altitude (e.g., if the UAV is in contact with ground or in flight), orientation of the UAV (e.g., information from an IMU), location (e.g. based on GPS information), an energy storage device power level (e.g., energy remaining in a battery). The UAV may automatically initiate the transformation process upon one or more triggering conditions. For example, a controller of the UAV may generate an instruction signal to transform to a first configuration or a second configuration in response to receiving condition information from one or more sensors indicating presence of a triggering condition. In some embodiments, the UAV may initiate a transformation to a space-saving configuration upon detection of contact with the ground, and/or a battery energy remaining level lower than a threshold level. In some embodiments, the UAV may initiate a transformation to an expanded configuration upon detection of reaching a target destination based on GPS location information.

In some embodiments, a controller (not shown) of the UAV 100 detecting completion of a transformation can trigger performance of a function. Detection by the controller of completion of one or more steps of the transformation can trigger performance of a function. The UAV may be powered-on while in the expanded configuration. The UAV may be powered-off in the space-saving configuration. For example, the controller may initiate a powering-on process if the controller detects that the central body 102 is in an expanded configuration, including if the central body has completed a transformation process to the expanded configuration. The controller may initiate a powering-off process if the controller detects that the central body is in a space-saving configuration, including if the central body has completed a transformation to the space-saving configuration. In some embodiments, the UAV may be transformed to the space-saving configuration after being powered off. In some embodiments, the UAV may be powered on prior to initiating transformation to an expanded configuration.

In some embodiments, one or more of the following can trigger performance of a function, such as powering on of the UAV 100: (1) latching on of locking mechanism to maintain the central body 102 in an expanded configuration, (2) contact sensor indicating presence of additional electronic component, such as an additional functional module, within an additional space on the central body, (3) starting of electrical communication with the additional electronic component and (4) stopping electrical communication between adjacent parts of the central body. In some embodiments, moving of one or more of the plurality of central body portions can trigger latching of a locking mechanism to maintain the central body in a desired configuration, initiating electrical communication with an additional functional module and/or stopping electrical communication between adjacent parts of the central body.

In some embodiments, the UAV 100 may be configured to perform further functions in response to the powering-on process. For example, after initiating and/or after completing powering-on of the UAV, the UAV can be configured to perform at least one of the following in response to initiating and/or completion of powering-on: take-off sequence, initiate configuration of a payload, performance of a task using the payload, initiate configuration of a sensor on the UAV, latching of locking mechanism to maintain the central body 102 in the first or second configuration. In some embodiments, the payload can be an imaging device (e.g., a camera), and the task comprises capturing an image of a target object using the imaging device.

In some embodiments, one or more of the following can trigger performance of a function, such as powering off of the UAV 100: (1) latching on of locking mechanism to maintain the central body in a space-saving configuration, (2) contact sensor indicating contact between adjacent parts of the central body, and (3) starting electrical communication between adjacent parts of the central body.

In some embodiments, powering on or powering off of the UAV 100 can be performed prior to, during, and/or after initiating transformation of the central body 102 between a first configuration and a second configuration.

In some embodiments, the UAV 100 comprises a controller (not shown) configured to receive a signal indicating transformation of the central body 102 into an expanded configuration, and in response to the signal, the controller can generate a control signal to power on the UAV 100. In some embodiments, the controller can be configured to receive a signal comprising instructions to power-on the UAV, and in response to the signal, generate a control signal to transform the central body into an expanded configuration. In some embodiments, the controller can be configured to automatically generate at least one of the following control signals after powering on of the UAV: take-off sequence, initialization of various sensors on the UAV, initialization of payload on the UAV, latching of locking mechanism to maintain the central body in the expanded or space-saving configuration. In some embodiments, the controller can receive a signal indicating transformation of the central body into a space-saving configuration, and in response to the signal, generate a control signal to power off the UAV. In some embodiments, the controller can be configured to receive a signal comprising instructions to power-off the UAV, and in response to the signal, generate a control signal to transform the central body into a space-saving configuration.

In some embodiments, the UAV 100 may comprise one or more mechanical and/or electronic mechanisms configured to maintain the UAV in the expanded configuration or space-saving configuration. For example, the UAV may comprise one or more safety mechanisms to prevent undesired occurrence of the transformation process. The UAV may comprise a safety mechanism to prevent transformation to a space-saving configuration while powered on and/or during flight. The UAV may comprise a safety mechanism to prevent transformation to an expanded configuration while powered off, such as when the UAV is in storage. The safety mechanism may prevent undesired powering on or powering off of the UAV.

The central body 102 can comprise a variety of shapes. In some embodiments, the central body may comprise a polygon, including a triangle, a quadrilateral shape, a pentagon, a hexagon, a heptagon, and/or an octagon. For example, one or more cross-sectional views of the central body can be a square and/or a rectangle. In some embodiments, the central body can comprise one or more curved portions. In some embodiments, the central body can have a rounded shape. In some embodiments, one or more cross-sectional views of the central body can comprise a circle and/or an ellipse. Different cross-sectional views of the central body may comprise different shapes.

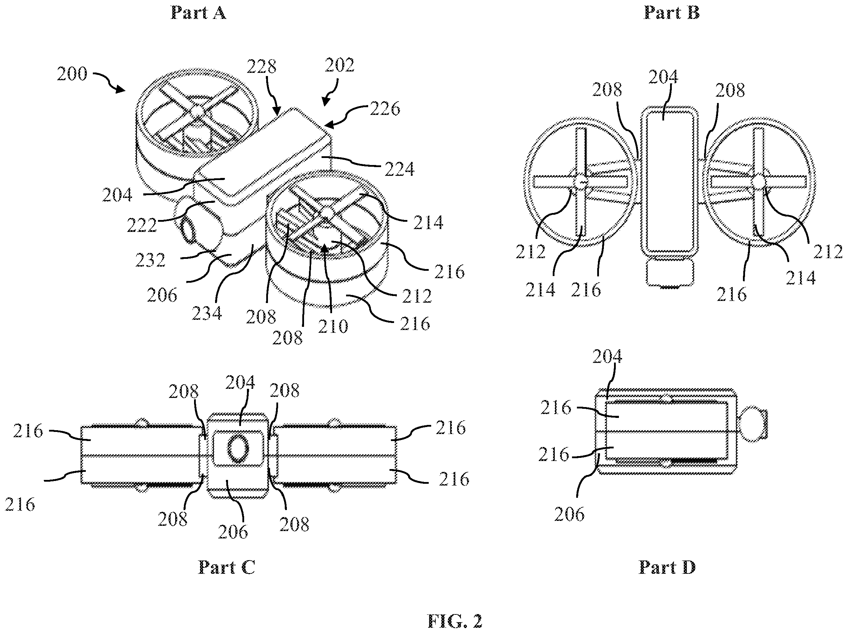

Further examples of UAVs comprising a transformable central body are described with reference to FIGs 2-12. In some embodiments, the UAVs described with reference to FIGs. 2-12 comprise one or more features of the UAV 100 described with reference to FIG. 1.

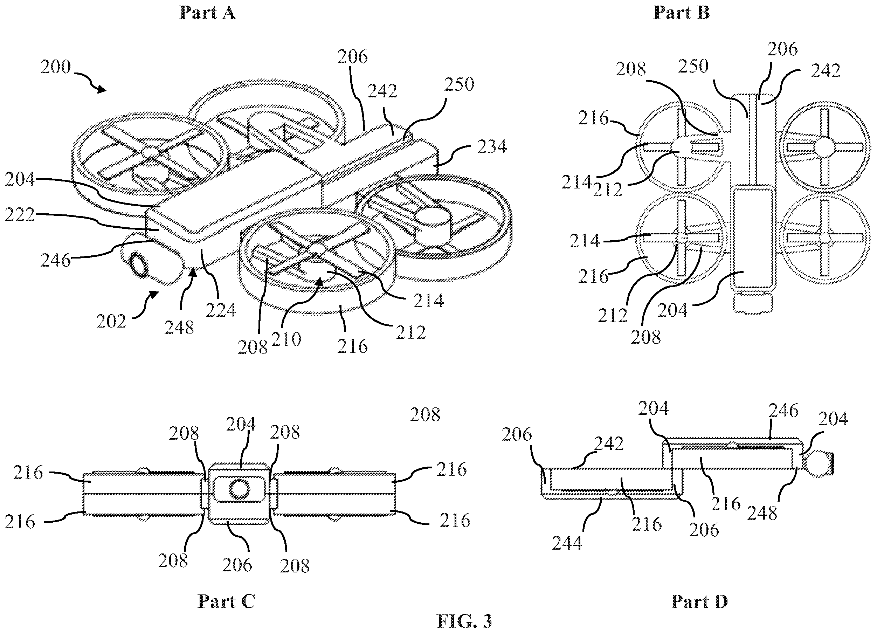

FIG. 2 shows schematic diagrams of an example of a UAV 200 in a first configuration and FIG. 3 shows schematic diagrams of the UAV 200 in a second configuration. The first configuration can be a space-saving configuration and the second configuration can be an expanded configuration.

Part A of FIG. 2 shows a perspective view of the UAV 200 in the first configuration. The UAV 200 can have a central body 202 comprising a first central body portion 204 and a second central body portion 206. In the example shown in Part A, the first central body portion and the second central body portion can each have a quadrilateral shape such that the first central body portion can have four lateral walls, 222, 224, 226, 228 and the second central body portion can have four lateral walls 232, 234, 236 (not shown) and 238 (not shown). In some embodiments, the quadrilateral shape can be a rectangle or substantially a rectangle such that adjacent lateral walls of both the first central body portion and second central body portion are perpendicular or substantially perpendicular to one another. For example, lateral walls 222 and 224 are perpendicular or substantially perpendicular to one another, lateral walls 224 and 226 are perpendicular or substantially perpendicular to one another, lateral walls 226 and 228 are perpendicular or substantially perpendicular to one another, and lateral walls 222 and 228 are perpendicular or substantially perpendicular to one another. In some embodiments, lateral walls 232 and 234 are perpendicular or substantially perpendicular to one another, lateral walls 234 and 236 are perpendicular or substantially perpendicular to one another, lateral walls 236 and 238 are perpendicular or substantially perpendicular to one another, and lateral walls 232 and 238 are perpendicular or substantially perpendicular to one another.

Each of the first central body portion 204 and the second central body portion 206 of the central body 202 can comprise a plurality of arms 208 extending therefrom. Referring to Part A of FIG. 2, the first central body portion can comprise a first arm 208 extending from the lateral wall 224 and a second arm 208 extending from the lateral wall 228. The second central body portion can comprise a third arm 208 extending from the lateral wall 324 and a fourth arm 208 extending from the lateral wall 326. Each arm 208 can be configured to support a propulsion unit 210. The propulsion unit 210 can comprise a rotor 212 and a set of rotor blades 214 coupled to the rotor 212. Rotation of the rotor can result in rotation of the set of rotor blades to generate lift for the UAV. As shown in Part A of FIG. 2, the propulsion unit can be supported at a distal portion of the arm distal from the central body of the UAV. Each arm 208 may be coupled to a rotor blades guard configured to protect one or more components of the propulsion unit, such as the set of rotor blades.

The propulsion units 210 coupled to the arms 208 extending from the first central body portion 204 can be oriented such that their sets of rotor blades 214 are positioned away from the propulsion units coupled to the arms extending from the second central body portion 206. For example, propulsion units coupled to respective arms extending from the lateral wall 224 and the lateral wall 234 can have opposing orientations such that the rotor blades of the two propulsion units are oriented in opposite directions. Propulsion units coupled to respective arms extending from lateral walls 228 and 238 can have opposing orientations such that the rotor blades of the two propulsion units are oriented in opposite directions. The propulsion units may be vertically oriented, for example, in an orientation parallel or substantially parallel to a yaw axis of the UAV 200.

In the first configuration, the first central body portion 204 can be positioned above the second central body portion 206 of the UAV 200, for example all portion of the first central body portion being above all portions of the second central body portion. The first central body portion and the second central body portion can be positioned one over the other along a direction parallel or substantially parallel to a yaw axis of the UAV. In some embodiments, the first central body portion and the second central body portion 206 can share a vertical axis. For example, the vertical axis can be the yaw axis of the UAV, or the vertical axis can be parallel or substantially parallel to the yaw axis of the UAV. In some embodiments, the center of mass of the first central body can be above and aligned with the center of mass of the second central body.

In some embodiments, the first central body portion 204 and the second central body portion 206 can comprise one or more dimensions which are similar or the same, such as a width and/or a length. For example, the first central body portion and the second central body portion can have similar or the same dimensions extending in a direction parallel or substantially parallel to a roll axis and a pitch axis of the UAV 200 such that the first central body portion can be positioned above and in alignment with the second central body portion along the yaw axis or along a direction parallel or substantially parallel to the yaw axis of the UAV. For example, the lateral walls 222, 224, 226 and 228 can be co-planar or substantially co-planar with the lateral walls 232, 234, 236 and 238, respectively.

In some embodiments, in the first configuration, the first central body portion 204 may be positioned above the second central body portion 206 such that the first central body portion and the second central body can be completely overlapping with one another. In some embodiments, the first central body portion may be positioned above the second central body portion such that the first central body portion and the second central body can have up to about 90% overlap with one another, up to about 80%, up to about 70%, up to about 60% or up to about 50% overlap. In some embodiments, increased overlap between the first and second central bodies can reduce the footprint of the UAV 200 in the first configuration.

The arms 208 can extend from similar or the same positions on respective lateral walls of the first central body portion 204 and the second central body portion 206. In some embodiments, longitudinal axes of corresponding arms 208 extending from the first and second central body portions can be aligned with one another such that the longitudinal axes are positioned one over the other. For example, the arms extending from the lateral wall 224 and the lateral wall 324, and the propulsion units 210 and rotor blades guards 216 coupled to the arms, can be positioned one over the other, including being aligned with one another along a direction parallel or substantially parallel to the yaw axis of the UAV 200. The arms extending from the lateral wall 228 and the lateral wall 328, and the propulsion units and rotor blades guards coupled to the arms, can be positioned one over the other, including being aligned with one another along a direction parallel or substantially parallel to the yaw axis of the UAV 200.

Part B of FIG. 2 is a top-down view of the UAV 200 in the first configuration. In the figure, the first central body portion 204, the arms 208 extending from the first central body portion 204, the rotor blades guards 216 coupled to the arms extending from the first central body portion, and the rotors 212 and sets of rotor blades 214 supported by the arms are shown. The second central body portion 206, the arms extending from the second central body portion, the rotor blades guards coupled to the arms extending from the second central body portion, and the rotors and sets of rotor blades supported by the arms extending from the second central body portion are not shown in Part B of FIG. 2, as the second central body portion and the components coupled thereto are positioned beneath and in alignment with the first central body portion and components coupled thereto, respectively.

Part C of FIG. 2 is a front view of the UAV 200 in the first configuration. Part D of FIG. 2 is a side view of the UAV 200 in the first configuration. As shown in Parts C and D of FIG. 2, the first central body portion 204 is shown as being positioned over, in alignment with and in contact with the second central body portion 206. The rotor blades guards 216 coupled to the arms 208 extending from the first central body portion are positioned over, in alignment and contact with corresponding rotor blades guards coupled to the arms extending from the second central body portion. In some embodiments, the first central body portion can be positioned over and in alignment with, but not in contact with, the second central body portion. In some embodiments, the rotor blades guards coupled to the arms extending from the first central body portion can be positioned over and in alignment with, but not in contact with, corresponding rotor blades guards coupled to the arms extending from the second central body portion 206.

Part A of FIG. 3 is a perspective view of the UAV 200 in the second configuration. Part B of FIG. 3 is a top-down view, Part C of FIG. 3 is a front view, and Part D of FIG. 3 is a side view of the UAV in the second configuration. As described herein, the second configuration can be an expanded configuration. In some embodiments, the UAV can be in the expanded configuration during operation, such as during flight. The UAV can transform between the first configuration described with reference to FIG. 2 to the second configuration.

In the second configuration, the first central body portion 204 can be translationally displaced relative to the second central body portion 206. The first central body portion remains positioned above the second central body portion in the second configuration. For example, one or more of the first central body portion and the second central body portion can move relative to the other to transform the UAV 200 between the first configuration and the second configuration. One or more of the first central body portion and the second central body portion can move horizontally to transform the central body between the first and second configurations, such as along a direction parallel or substantially parallel to a roll axis of the UAV. For example, a vertical distance between the first central body portion and the second central body portion, and the arms 208, propulsion units 210 and rotor blades guards 216 coupled thereto can remain the same or substantially the same during and after the transformation. A height of the central body 202 can remain the same or substantially the same during and after the transformation. In some embodiments, a height of the UAV can remain the same or substantially the same during and after the transformation. The vertical distance between the first central body portion and the second central body portion, and the arms, propulsion units and rotor blades guards coupled thereto can be the same or substantially the same in the first configuration and the second configuration, and/or during transformation between the first and second configurations. In some embodiments, a width of the central body can remain the same or substantially same during and/or after the transformation. The first central body portion and the second central body portion can maintain the same or substantially same orientation during and/or after the transformation.

In some embodiments, one or more of the first central body portion 204 and the second central body portion 206 can move linearly or substantially linearly relative to the other to transform the central body 202 between the first configuration and second configuration. For example, as shown in Part A of FIG. 3, the first central body portion and the arms 208 extending therefrom can be translationally displaced relative to the second central body portion and the arms 208 extending therefrom. A total length of the central body 202 can be greater in the second configuration than in the first configuration. One or both of the first central body portion and the second central body portion can move along a linear or substantially linear path, such as in a horizontal plane, to achieve the translational displacement. For example, a center of mass of the first central body portion can be horizontally displaced relative to the center of mass of the second central body portion. A horizontal distance between the centers of mass of the first and second central body portions can be greater in the second configuration than in the first configuration. In some embodiments, a horizontal distance between arms extending from lateral walls 224 and 234, and between arms extending from lateral walls 228 and 238, are greater in the second configuration than in the first configuration, while the vertical distance remain the same or substantially the same. In some embodiments, a horizontal distance can be maintained between an arm extending from the lateral wall 224 and an arm extending from the lateral wall 234, and/or between an arm extending from the lateral wall 228 and an arm extending from the lateral wall 238, in the second configuration, such that rotor blades 214 coupled to the respective arms extending from the lateral walls 224, 234 do not overlap, and rotor blades 214 coupled to the respective arms extending from the lateral walls 228, 238 do not overlap. In some embodiments, a horizontal distance can be maintained between an arm extending from the lateral wall 224 and an arm extending from the lateral wall 234, and/or between an arm extending from the lateral wall 228 and an arm extending from the lateral wall 238, in the second configuration, such that rotor blades guards 216 coupled to the respective arms extending from the lateral walls 224, 234 do not overlap, and rotor blades guards 216 coupled to the respective arms extending from the lateral walls 228, 238 do not overlap. The reduced or eliminated overlap can facilitate generation of lift by propulsion units 210 coupled to respective arms of the UAV to enable the UAV to fly.

The first central body portion 204 can comprise an upper surface 246 and a lower surface 248. The second central body portion 206 can comprise an upper surface 242 and a lower surface 244. In some embodiments, the second central body portion can comprise on the upper surface a first guide feature, and the first central body portion can comprise a second corresponding guide feature on the lower surface configured to couple to the first guide feature of the upper surface. The guide features can be configured to guide movement of one or more of the first central body portion and the second central body portion relative to the other. In some embodiments, the guide features may facilitate maintaining desired position of the first central body portion and the second central body portion relative to one another.

The second central body portion 206 can comprise a guide rail 250 on the upper surface 242. The guide rail can be configured to guide movement of one or more of the first central body portion 204 and the second central body portion relative to the other, and/or maintain desired position of the first central body portion and the second central body portion relative to one another. The first central body portion may comprise a corresponding protrusion on a lower surface 248 oriented towards the upper surface of the second central body portion. The corresponding protrusion can mate with the guide rail to guide movement of the first central body portion and/or the second central body portion. For example, the guide rail can be configured to guide movement of the first central body portion and/or the second central body portion along a linear or substantially linear path. In some embodiments, the guide rail may be on the lower surface of the first central body portion and the second central body portion can comprise a corresponding protrusion on the upper surface for mating with the guide rail.

In Part B of FIG. 3, translational displacement of the first central body portion 204 relative to the second central body portion 206, and of the corresponding arms 208 extending therefrom, are shown. The first central body portion can be translationally displaced relative to the second central body portion such that one or more of the arms extending from the first central body portion, rotor blades guards 216, and rotors 212 and rotor blades 214 coupled to the arms, do not or substantially do not overlap with one or more of the arms extending from the second central body portion, rotor blades guards, and rotors and rotor blades coupled to the arms extending from the second central body portion. For example, the arm extending from the lateral wall 228, and the rotor, set of rotor blades and rotor blades guards coupled to the arm extending from the lateral wall 228 may not be positioned over any portion of the arm extending from the lateral wall 238, and the rotor, set of rotor blades and rotor blades guards coupled to the arm extending from the lateral wall 238, respectively.

In some embodiments, at least a portion of the first central body portion 204 can be positioned over the second central body portion 206 in the second configuration, for example as shown in Part D of FIG. 3. As shown in Part D of FIG. 3, the first central body portion 204 and the second central body portion 206 can be displaced relative to one another while maintaining an overlapping portion between the two. The degree of overlap between the first central body portion and the second central body portion can vary. The overlap can be selected to provide desired stability in the second configuration and/or to provide desired contact between so as to facilitate electrical communication between electronic components of the first central body portion and electronic components of the second central body portion. The overlap between the first and second central body portions in the second configuration can be smaller than the overlap between the first and second central body portions in the first configuration. In some embodiments, the first and second central body portions can have up to about 50% overlap with one another, up to about 40%, up to about 30%, up to about 20% or up to about 10% overlap. In some embodiments, a footprint of the central body 202 can be up to about 10% greater in the second configuration, up to about 20% greater, up to about 30% greater, up to about 40% greater, up to about 50% greater, up to about 60% greater, up to about 70% greater, up to about 80% greater, or up to about 90% greater.

In some embodiments, the UAV 200 in the second configuration can comprise one or more additional storage spaces not present in the first configuration. In some embodiments, the central body 202 can comprise one or more additional storage spaces in the second configuration, the one or more additional storage spaces being at least partially defined by one or more surfaces of the first central body portion 204 and one or more surfaces of the second central body portion 206. The first central body portion can be displaced relative to the second central body portion, such that at least a portion of the upper surface of the second central body portion and/or at least a portion of the lower surface 248 of the first central body portion not exposed in the first configuration is exposed in the second configuration. For example, an additional storage space can be defined at least in part by the upper surface 242 of the second central body portion and the lateral wall 226 of the first central body portion. As will be described in further details herein, a functional module may be received in the additional storage space. A functional module may be coupled to one or more surfaces of the central body exposed in the second configuration that is not exposed in the first configuration. For example, the functional module can be coupled to the central body via one or more mechanical and/or electrical interfaces on the upper surface of the second central body portion and/or the lateral wall 226 of the first central body portion.

In some embodiments, an additional storage space can be defined at least in part by the lower surface 248 of the first central body portion 204 and the lateral wall 322 of the second central body portion 206. A functional module can be received in this additional storage space. For example, the functional module may be coupled to the central body 202 via one or more mechanical and electrical interfaces on the lower surface 248 and/or the lateral wall 322.

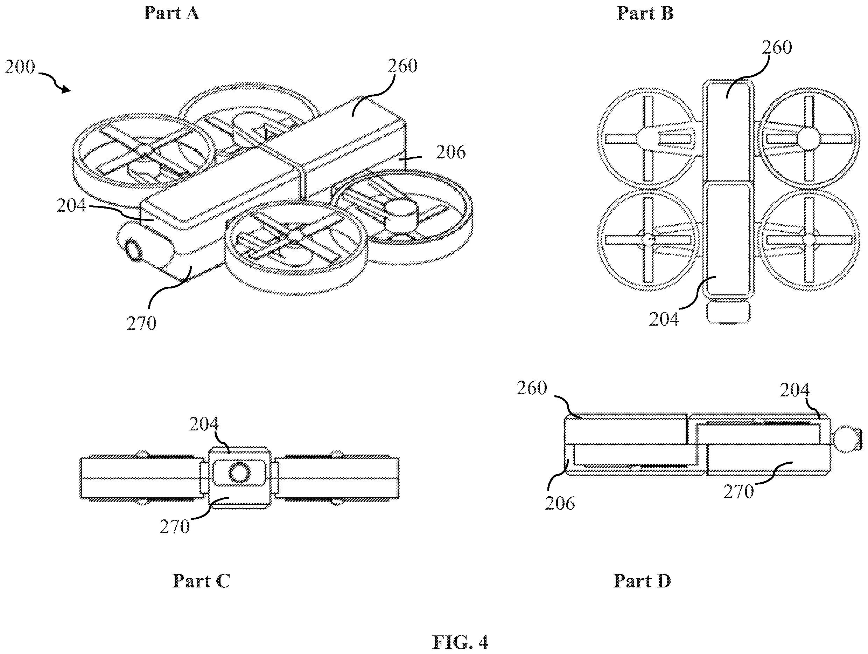

FIG. 4 shows schematic diagrams of the UAV 200 in the second configuration and comprising two functional modules coupled thereto. Part A of FIG. 4 is a perspective view, Part B of FIG. 4 is a top-down view, Part C of FIG. 4 is a front view and Part D of FIG. 4 is a side view, of the UAV comprising the two functional modules. As shown in Part A, the central body 202 can comprise a first functional module 260 and a second functional module 270 coupled thereto. The first functional module 260 can be coupled to the upper surface 242 of the second central body portion 206 and/or the lateral wall 226 of the first central body portion 204. The second functional module can be coupled to the lower surface 248 of the first central body portion 204 and the lateral wall 236 of the second central body portion 206. One or more electrical and/or mechanical interfaces may be on one or more of the upper surface 242, lateral wall 226, lower surface 248 and lateral wall 236 to provide desired mechanical coupling of the functional modules to the central body and/or electrical communication between the functional modules and the central body. The mechanical interface may comprise one or more features for mechanically coupling to the functional modules and/or maintaining the functional modules in position. In some embodiments, the mechanical coupling mechanism comprises a latching mechanism. In some embodiments, the mechanical coupling mechanism comprises a locking mechanism. The electrical interface can comprise one or more electrical contacts for providing electrical communication between the functional modules and one or more other electronic components of the UAV.

In some embodiments, a functional module comprises one or more sensors. For example, the one or more sensors may comprise one or more of a gyroscope, inertial measurement unit (IMU), mass sensor, accelerometer, magnetometer, global positioning system (GPS) receiver, combinations thereof, and/or the like. In some embodiments, the functional module comprises an energy source, such as a battery. The battery may be an auxiliary battery configured to provide backup energy, and/or an additional energy source. In some embodiments, the battery may be the primary energy source for the UAV 200.

One or more surfaces of the first central body portion 204 and the second central body portion 206 which define at least in part an additional storage space may comprise an electrical interface configured to provide communication between the UAV 200 and a functional module received within the additional storage space. The electrical interface may provide electrical coupling to deliver electrical energy to the functional module, such as to power the functional module. The electrical interface may be configured to allow communication of data from the functional module to the UAV (e.g., between the UAV and one or more sensors). In some embodiments, the electrical interface may allow providing instruction signals between the functional module and the UAV, such as between the functional module and one or more electronic components of the UAV, including a flight controller of the UAV. One or more of the surfaces of the first central body portion and the second central body portion can include a plurality of electrical interfaces, including at different positions on the surfaces, configured to provide different types of electrical communication between the functional module and the UAV.

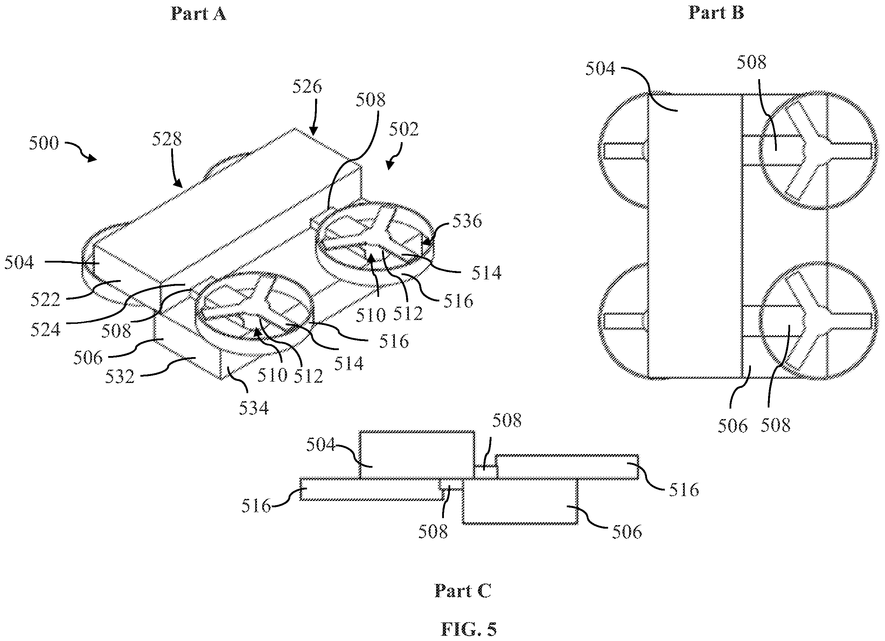

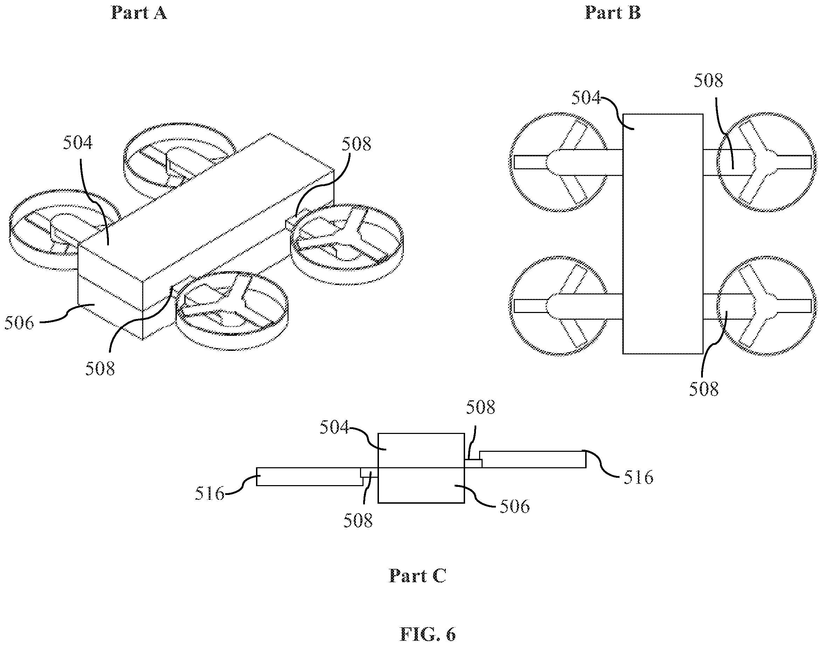

FIG. 5 shows schematic diagrams of another example of a UAV 500 in a first configuration. Part A of FIG. 5 is a perspective view, Part B of FIG. 5 is a top-down view and Part C of FIG. 5 is a front view. FIG. 6 shows schematic diagrams of the UAV in a second configuration. Part A of FIG. 6 is a perspective view, Part B of FIG. 6 is a top-down view and Part C of FIG. 6 is a front side view. The UAV can have the first configuration while in a non-operation mode, such as while powered-off. The UAV may be in the first configuration to facilitate transport and/or storage. The UAV can be in the second configuration while in operation, such as during flight. The UAV can transform between the first configuration and second configuration. For example, the UAV can transform between the first configuration and the second configuration such that the UAV is in the first configuration during a non-operation mode and in the second configuration during an operation mode.

The UAV 500 can have a central body 502 comprising a first central body portion 504 and a second central body portion 506. In the first configuration, the first central body portion can be displaced relative to the second central body portion along a horizontal axis, such as an axis parallel or substantially parallel to the pitch axis of the UAV. The first central body portion and the second central body portion can have a quadrilateral shape, such that the first central body portion comprises lateral walls 522, 524, 526 and 528, and the second central body comprises lateral walls 532, 534, 536 and 538 (not shown). In some embodiments, the first central body portion and the second central body portion can have a rectangular or substantially rectangular shape such that adjacent lateral walls are perpendicular or substantially perpendicular to one another. As shown in Part A of FIG. 5, the first central body portion can comprise two arms 508 extending from the lateral wall 524 and the second central body portion can comprise two arms 508 extending from lateral wall 538. The lateral wall 524 can be oriented in a direction opposite that of the lateral wall 538 such that the arms extending from the lateral wall 524 extend in a direction opposite that of those arms extending from the lateral wall 538.

Each arm 508 can be configured to support a propulsion unit 510. The propulsion unit 510 can comprise a rotor 512 and a set of rotor blades 514 coupled to the rotor 512. Rotation of the rotor can result in rotation of the set of rotor blades to generate lift for the UAV 500. As shown in Part A of FIG. 5, the propulsion unit can be supported at a distal portion of the arm distal from central body portion from which the arm extends. Each arm may be coupled to a rotor blades guard 516 configured to protect one or more components of the propulsion unit, such as the set of rotor blades.

The propulsion units 510 coupled to the arms 508 extending from the first central body portion 504 can be oriented such that their sets of rotor blades 514 are positioned away from the propulsion units coupled to the arms extending from the second central body portion 506. For example, propulsion units coupled to arms extending from the lateral wall 524 can have an opposing orientation relative to the propulsion units coupled to arms extending from the lateral wall 538, such that the rotor blades of the two propulsion units coupled to the arms extending from the lateral wall 524 are oriented in an opposite direction relative to those of the arms extending from the lateral wall 538.

In the first configuration, the first central body portion 504 can be positioned above the second central body portion 506, for example all portion of the first central body portion being above all portions of the second central body portion. For example, a center of mass of the first central body portion can be horizontally displaced relative to the center of mass of the second central body portion. The first central body portion can comprise a portion which is positioned above and to the side of the second central body portion, including to a left side or a right side of the second central body. The first central body can be positioned over and displaced relative to the second central body portion in the first configuration, such that the first and second central body portions can have less than about 50% overlap, less than about 40% overlap, less than about 30% overlap, less than about 20% overlap, or less than about 10% overlap. In some embodiments, the degree of overlap between the first central body portion and the second central body portion may be selected to provide desired mechanical stability in the first configuration.

In some embodiments, all portion of the arms 508 extending from the first central body portion 504, and propulsion units 510 and rotor blades guards 516 coupled to the arms extending from the first central body portion, are above all portion of the arms extending from the second central body portion 506, and propulsion units and rotor blades guards coupled to the arms extending from the second central body portion. In some embodiments, in the first configuration, at least a portion of the arms extending from to the first central body portion can extend over the second central body portion. At least a portion of the arms extending from the second central body portion can extend below the first central body portion. A portion of the first central body portion can be positioned over the second central body portion. The first central body portion and the second central body portion are not aligned along a vertical axis in the first configuration, such as along an axis parallel to the yaw axis of the UAV. This is also shown in Parts B and C of FIG. 5. An overlap between one or more arms and a central body portion may provide increased protection for the one or more arms in the first configuration, for example, using the central body to reduce or prevent damage to the one or more arms during storage and/or transport.

The first central body portion 504 can remain above the second central body portion 506, for example all portion of the first central body portion being above all portions of the second central body portion, during and/or after transformation between the first configuration and the second configuration. Referring to Parts A through C of FIG. 6, in the second configuration, a larger portion of the first central body portion can be positioned over the second central body portion in the second configuration. In some embodiments, the first central body portion can be above and in alignment with the second central body portion, such as along the yaw axis of the UAV. In some embodiments, the first and second central body portions can have a greater overlap in the second configuration, including up to about 90% overlap with one another, up to about 80%, up to about 70%, up to about 60% or up to about 50% overlap. For example, an increase in overlap of the first and central body portions in the second configuration can provide a central body with a reduced width in the second configuration. In some embodiments, a width of the central body can be up to about 10% less, up to about 20%, up to about 30%, or up to about 40% less in the second configuration than in the first configuration. In some embodiments, the footprint of the central body can be up to up to about 40% smaller, up to about 30%, up to about 20% or up to about 10% smaller in the second configuration than in the first configuration.

In some embodiments, the first central body portion 504 and the second central body portion 506 can share a vertical axis in the second configuration. In some embodiments, the vertical axis can be parallel or substantially parallel to the yaw axis of the UAV 500. In some embodiments, the vertical axis can be the yaw axis of the UAV. For example, the first central body portion can be positioned over the second central body portion such that the two are in alignment along the vertical axis. In some embodiments, the center of mass of the first central body portion can be aligned with the center of mass of the second central body portion along a direction parallel or substantially parallel to the yaw axis of the UAV. In some embodiments, the first central body portion is positioned over the second central body portion in the second configuration such that the arms 508 extending from the first central body portion and the second central body portion do not extend over any portion of the first central body portion and the second central body portion. For example, arms extending from the first central body portion do not overlap with the second central body and the arms extending from the second central body portion do not overlap with the first central body portion, such as to facilitate generation of lift by propulsion units 510 coupled to respective arms of the UAV to enable the UAV to fly.

In some embodiments, the first central body portion 504 and the second central body portion 506 can comprise one or more dimensions which are similar or the same. For example, the first central body portion and the second central body portion can have similar or the same dimensions extending in a direction parallel or substantially parallel to a roll axis and a pitch axis of the UAV 500 such that the first central body portion can be positioned above and in alignment with the second central body portion along the yaw axis or along a direction parallel or substantially parallel to the yaw axis of the UAV. For example, the lateral walls 522, 524, 526 and 528 can be co-planar or substantially co-planar with the lateral walls 532, 534, 536 and 538, respectively.

One or more of the first central body 504 and second central body portion 506 can move in along a direction parallel or substantially parallel to the pitch axis of the UAV 500 to transform the central body 502 between the first configuration and the second configuration. In some embodiments, one or more of the first central body and second central body portion can move along a linear or substantially linear path to achieve the transformation. A length of the central body can remain the same and/or substantially the same during and/or after the transformation, while a width of the central body can decrease during and/or after the transformation. For example, the length of the central body can remain the same during and after the transformation and the width can decrease during a transformation from the first configuration to the second configuration such that the width is smaller in the second configuration. The first central body portion and the second central body portion may maintain the same or substantially the same orientation during and/or after transformations between the first and second configurations.

A height of the central body 502 can remain the same or substantially the same during and/or after transformation between the first configuration and the second configuration. For example, a vertical distance between the first central body portion 504 and second central body portion 506, and corresponding components coupled thereto, can remain the same or substantially the same during and/or after the transformation. In some embodiments, a vertical distance between arms 508 extending from the first central body portion and arms extending from the second central body portion can remain the same or substantially the same during and/or after the transformation. The vertical distance may extend along a direction parallel or substantially parallel to the yaw axis. The vertical distance between propulsion units 510 and rotor blades guards 516 coupled to arms extending from the first central body portion and propulsion units and rotor blades guards coupled to arms extending from the second central body portion can remain the same or substantially the same during and/or after the transformation. In some embodiments, a horizontal distance between an arm extending from the first central body portion and an arm extending from a corresponding position on the second central body portion can change during the transformation. For example, the horizontal distance may increase during transformation from the first configuration to the second configuration. The horizontal distance may be a distance extending along a direction parallel or substantially parallel to the pitch axis of the UAV. The horizontal distance between propulsion units and rotor blades guards coupled to arms extending from the first central body portion and propulsion units and rotor blades guards coupled to arms extending from the second central body portion can change during the transformation. For example, the horizontal distance can increase during transformation from the first configuration to the second configuration.

Part B of FIG. 6 is a top-down view of the UAV 500 in the second configuration. In Part B of FIG. 6, the first central body portion 504, the arms 508 extending from the first central body portion, the rotor blades guards 516 coupled to the arms extending from the first central body portion, and the rotors 512 and sets of rotor blades 514 supported by the arms are shown. At least a portion of the arms extending from the second central body portion 506, the rotor blades guards coupled to the arms extending from the second central body portion, and the rotors and sets of rotor blades supported by the arms are also shown. The second central body portion is not shown in Part B of FIG. 6, as the second central body portion is positioned beneath and in alignment with the first central body portion. This is also shown in Part C of FIG. 6. As shown in Part C of FIG. 6, the first central body portion is shown as being positioned over, in alignment with and in contact with the second central body portion. In Part C of FIG. 6, no portion or substantially no portion of the arms extending from the second central body portion extends beneath the first central body portion and no portion or substantially no portion of the arms extending from the first central body portion extends above the second central body portion.

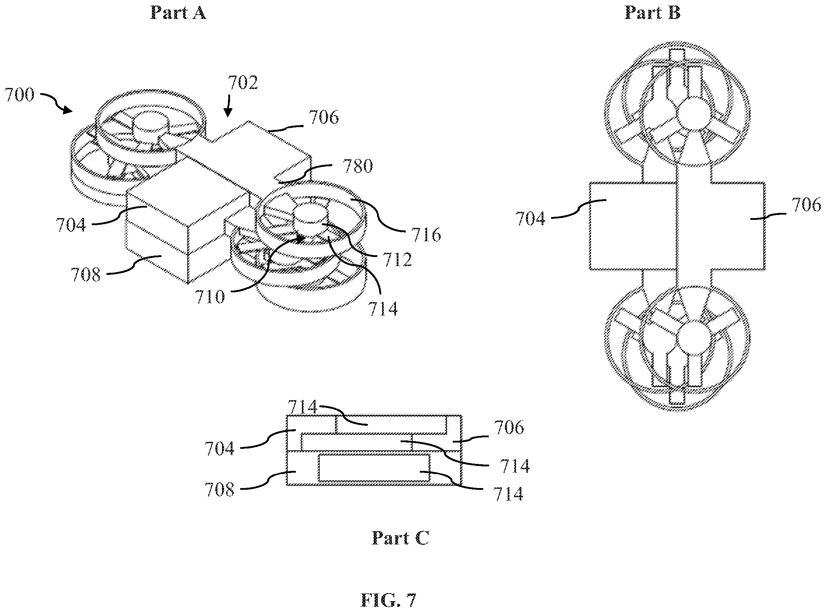

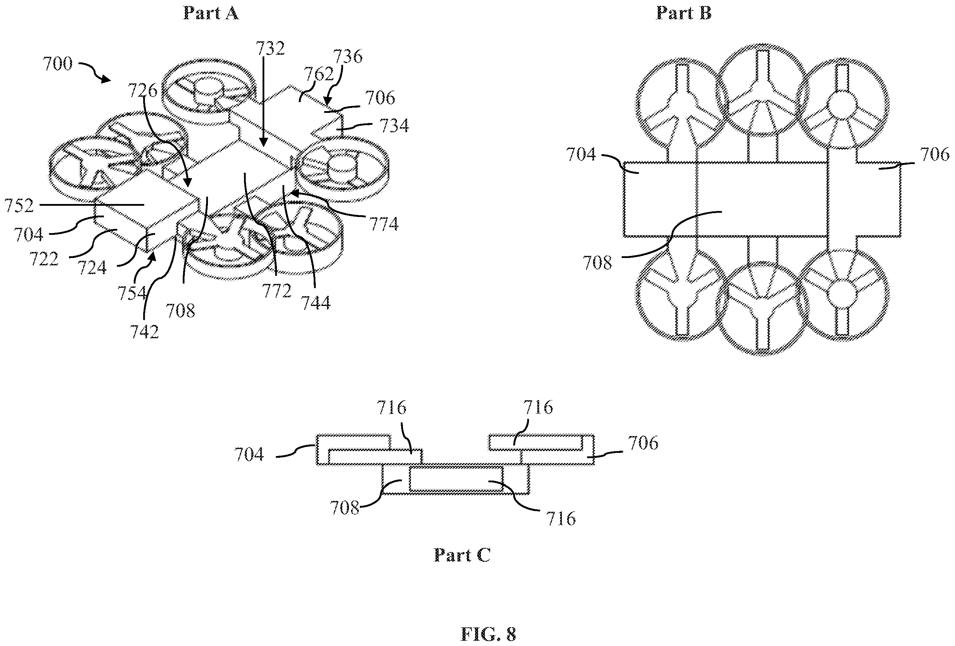

FIG 7 shows schematic diagrams of another example of a UAV 700 in a first configuration. FIG. 8 shows schematic diagrams of the UAV in a second configuration. The first configuration can be space-saving configuration. The second configuration can be an expanded configuration. The UAV can be in the first configuration while in a non-operation mode. The UAV can have the first configuration to facilitate transport and/or storage. In some embodiments, the first configuration can be a space-saving configuration. In some embodiments, the UAV can be in the second configuration in an operation mode, such as during flight.

Part A of FIG. 7 is a perspective view of the UAV 700 in the first configuration. Part B of FIG. 7 is a top-down view and Part C of FIG. 7 is a side view. The UAV can comprise a central body 702 comprising a first central body portion 704, a second central body portion 706 and a third central body portion 708. The first central body portion and the second central body portion can be positioned above the third central body portion, for example all portions of the first central body portion and the second central body portion being positioned above the third central body portion. The first central body portion and the second central body portion 06 can be positioned laterally next to one another in the first configuration. For example, one or more portions of the first central body portion can be horizontally co-planar with one or more portions of the second central body portion. In some embodiments, the first central body portion and the second central body portion can be positioned adjacent to one another such that the first central body portion and the second central body portion can be in contact with one another along corresponding lateral walls.

In some embodiments, the first central body portion 704 and the second central body portion 706, and the third central body portion 708 each comprise a quadrilateral shape, including a rectangular or substantially rectangular shape. For example, the first central body portion can comprise lateral walls 722, 724, 726 and 728 (not shown), an upper surface 752 and a lower surface 754. The second central body portion can comprise lateral walls 732, 734, 736 and 738 (not shown), an upper surface 762 and a lower surface 764 (not shown). The third central body portion can comprise lateral walls 742, 744, 746 (not shown) and 748 (not shown), an upper surface 772 and a lower surface 774. In the first configuration, the lateral wall 726 of the first central body portion can be oriented towards and positioned adjacent to the lateral wall 732 of the second central body portion. For example, the lateral wall 726 can be in contact with the lateral wall 732. In the first configuration, the lower surface 754 of the first central body portion and the lower surface 764 of the second central body portion can be positioned adjacent to and oriented towards the upper surface 772 of the third central body portion. For example, the lower surface 754 and the lower surface 764 of can be in contact with the upper surface 772.

The first central body portion 704 and the second central body portion 706 can be positioned to the side of one another. The first central body portion and the second central body portion can be positioned adjacent to one another along a direction parallel or substantially parallel to the roll axis of the UAV 700. In some embodiments, the first central body portion and the second central body portion can share a horizontal axis in the first configuration. The horizontal axis can be parallel or substantially parallel to the roll axis of the UAV. In some embodiments, the first central body portion and the second central body portion can be positioned over the third central body portion 708 such that lateral wall 744 is co-planar or substantially co-planar with the lateral walls 724 and 734, lateral wall 748 is co-planar or substantially co-planar with the lateral walls 728 and 738, lateral wall 722 is co-planar or substantially co-planar with the lateral wall 742, and lateral wall 736 is co-planar or substantially co-planar with the lateral wall 746. In some embodiments, the upper surface 752 of the first central body portion can be co-planar or substantially co-planar with the upper surface 762 of the second central body portion. In some embodiments, increased overlap between the first and second central bodies, and the third central body can reduce the footprint of the UAV 700 in the first configuration.

Each of the first central body portion 704, second central body portion 706 and third central body portion 708 can comprise a plurality of arms 780 extending therefrom. For example, the first central body portion can comprise a first arm extending from the lateral wall 724 and a second arm extending from the lateral wall 728. The second central body portion can comprise a third arm extending from the lateral wall 734 and a fourth arm extending from the lateral wall 738. The third central body portion 708 can comprise a fifth arm extending from the lateral wall 744 and a sixth arm extending from the lateral wall 748. Each arm can be configured to support a propulsion unit 710. The propulsion unit can comprise a rotor 712 and a set of rotor blades 714 coupled to the rotor. The propulsion unit 710 can be supported at a distal portion of the arm distal from the central body 702 of the UAV 700. Each arm may be coupled to a rotor blades guard 716 configured to protect one or more components of the propulsion unit, such as the set of rotor blades. In some embodiments, the arms extending from the first central body portion and the arms extending from the second central body portion can be positioned over the arms extending from the third central body portion in the first configuration. The arms extending from the second central body portion may be positioned above the arms extending from the first central body portion, or vice versa.

The propulsion units 710 coupled to the arms 780 extending from the first central body portion 704 and/or the second central body portion 760 can be oriented such that their sets of rotor blades 714 are positioned away from the propulsion units coupled to the arms extending from the third central body portion 708. For example, propulsion units coupled to respective arms extending from the lateral walls 724, 728 and/or to lateral walls 744, 748 can have an orientation opposite that of propulsion units coupled to arms extending from the third central body portion.

Part A of FIG. 8 is a perspective view of the UAV 700 in the second configuration. Part B of FIG. 8 is a top-down view and Part A of FIG. 8 is a side view of the UAV 700 in the second configuration. In the second configuration, the first central body portion 704 is translationally displaced relative to the second central body portion 706 such that a horizontal distance between the first and second central body portions is greater in the second configuration than in the first configuration. The center of mass of one or more of the first central body portion and the second central body portion may be shifted relative to their positions in the first configuration. For example, at least a portion of the upper surface 772 of the third central body portion 708 positioned below the first central body or the second central body in the first configuration may not be positioned below the first central body portion or the second central body portion. In some embodiments, at least a portion of the lower surface 754 of the first central body portion and at least a portion of the lower surface 764 of the second central body portion positioned over the third central body portion may not be positioned over the third central body portion in the second configuration.

In some embodiments, one or more additional storages space may be present in the second configuration. In some embodiments, one or more surfaces of the first central body portion 704, second central body portion 706 and third central body portion 708 not exposed in the first configuration can be exposed in the second configuration. One or more of such surfaces can define at least in part an additional storage space. For example, one or more of such surfaces comprise one or more mechanical and/or electrical interfaces to couple to a functional module.

In some embodiments, a horizontal distance between the first central body portion 704 and the second central body portion 706 can be greater in the second configuration than the first configuration such that an additional storage space is present between the first and second central body portions in the second configuration. For example, the first central body portion and the second central body portion may be separated and not be in contact with one another in the second configuration such that a space is present between the lateral walls 726 and 732. The space can be an additional storage space. In some embodiments, an additional storage space may be defined at least in part by a portion of the first central body portion, the second central body portion and the third central body portion 708. In some embodiments, additional storage space may be defined at least in part by the lateral wall 726, the lateral wall 732 and at least a portion of the upper surface 772. As described herein, one or more functional modules can be positioned within the additional storage space, including one or more sensors and/or energy sources. One or more of the lateral wall 726, the lateral wall 732 and the upper surface 772 can comprise one or more mechanical and/or electrical interfaces for coupling to the functional module.

In some embodiments, an additional storage space may be defined at least in part by the first central body portion 704 and the third central body portion 708. For example, the additional storage space can be defined at least in part by the lower surface 754 of the first central body portion 704 and the lateral wall 742 of the third central body portion. In some embodiments, an additional storage space may be defined at least in part by the second central body portion 706 and the third central body portion. For example, the additional storage space can be defined at least in part by the lower surface 764 of the second central body portion and the lateral wall 746 of the third central body portion. One or more of the lateral walls 742, 746 and the lower surfaces 754, 764 can comprise one or more mechanical and/or electrical interfaces for coupling to the functional module.

One or more of the first central body portion 704 and the second central body portion 706 can move translationally relative to the other to transform the central body 702 between the first configuration and the second configuration. For example, one or more of the first central body portion and the second central body portion can move along a linear or substantially linear path to transform the central body. One or more of the first central body portion and the second central body portion can move horizontally to transform the central body between the first and second configurations, such as along a direction parallel or substantially parallel to a roll axis of the UAV. For example, a length of the central body can be greater in the second configuration while a width of the central body can remain the same or substantially the same during and/or after the transformation. A length of the central body may increase during a transformation from the first configuration to the second configuration. In some embodiments, the first and second central body portions can maintain the same or substantially the same orientation during and/or after the transformation.

In some embodiments, during and/or after the transformation, the first central body portion 704 and the second central body portion 706 can be positioned above the third central body portion 708, for example all portions of the first central body portion and the second central body portion being positioned above the third central body portion. The horizontal distance between the first central body portion and the second central body portion can change during the transformation. The horizontal distance may be a distance extending along a direction parallel or substantially parallel to the roll axis of the UAV 700. The horizontal distance can increase during transformation from the first configuration to the second configuration. For example, a horizontal distance between arms 780 extending from the first central body portion and arms extending from the second central body portion can increase during transformation from the first configuration to the second configuration, including a horizontal distance between the propulsion units 710 and rotor blades guards 716 coupled thereto. In some embodiments, a horizontal distance between arms extending from the third central body portion 708, and arms extending from the central body portion and/or arms extending from the second central body portion can increase during transformation from the first configuration to the second configuration, including a horizontal distance between the propulsion units and rotor blades guards coupled thereto.

In some embodiments, a vertical distance between the first central body portion 704 and the third central body portion 708 can remain the same or substantially the same during and after the transformation, including a vertical distance between the arms 780, propulsion units 710 and rotor blades guards 716 coupled thereto. The vertical distance between the second central body portion 706 and the third central body portion can remain the same or substantially the same during and after the transformation, including a vertical distance between the arms, propulsion units and rotor blades guards coupled thereto. The vertical distance can be a distance extending along a direction parallel or substantially parallel to the yaw axis of the UAV 700. In some embodiments, a height of the central body can remain the same or substantially the same during and/or after the transformation.

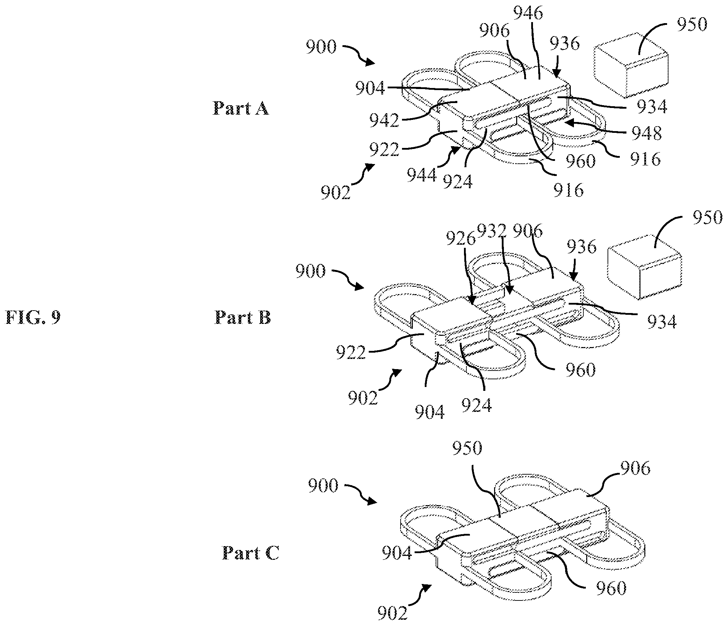

FIG. 9 shows schematic diagrams of an example of a UAV 900 not according to the appended claims. In Part A of FIG. 9, the UAV is in a first configuration. Parts B and C of FIG. 9 are schematic diagrams of the UAV in a second configuration. Part C of FIG. 9 is a schematic diagram of the UAV comprising an additional functional module 950. The first configuration can be a space-saving configuration. In some embodiments, the second configuration can be an expanded configuration. The UAV may be in the first configuration in a non-operation mode, such as when powered-off, and/or during storage and/or transport. The UAV may be in the second configuration in an operation mode, such as when powered-on, and/or during flight.

The UAV can comprise a central body 902 comprising a first central body portion 904 and a second central body portion 906. In the first configuration, the first central body portion can be positioned laterally next to the second central body portion in the first configuration. In some embodiments, the center of mass of the first central body portion and the center of mass of the second central body portion can be on the same horizontal axis. For example, the first central body portion and the second central body portion can be positioned one behind the other along a direction parallel or substantially parallel to the roll axis of the UAV. In some embodiments, the first central body portion and the second central body portion can share a horizontal axis. The horizontal axis may be parallel or substantially parallel to the roll axis of the UAV. In some embodiments, the horizontal axis may be the roll axis of the UAV.

In some embodiments, the first central body portion 904 and the second central body portion 906 can have a quadrilateral shape such that the first central body portion comprises lateral walls 922, 924, 926 and 928 (not shown), and the second central body portion comprises lateral walls 932, 934, 936 and 938 (not shown). The first central body can have an upper surface 942 and a lower surface 944. The second central body portion can have an upper surface 946 and a lower surface 948. In some embodiments, the first central body portion and the second central body portion can have a rectangular or substantially rectangular shape such that adjacent lateral walls are perpendicular or substantially perpendicular to one another. In the example shown in Parts A through C of FIG. 9, the first central body portion and the second central body portion can each comprise a plurality of rotor blades guards 916 extending therefrom. For example, the lateral walls 924 and 928 can each comprise a rotor blades guard extending therefrom. The lateral walls 934 and 938 can each comprise a rotor blades guard extending therefrom.

In some embodiments, the first central body portion 904 can be in contact with the second central body portion 906 in the first configuration. For example, the first central body portion can be positioned adjacent to and in contact with the second central body portion such that lateral wall 926 is in contact with lateral wall 932. In some embodiments, corresponding portions of the first central body portion and the second central body portion are co-planar or substantially co-planar with one another. In some embodiments, the first central body portion and the second central body portion can have one or more similar or same dimensions. In some embodiments, the first central body portion and the second central body portion can have a similar or the same dimension extending along a direction parallel or substantially parallel to the pitch axis of the UAV 900, such as a width. For example, the lateral wall 924 can be co-planar or substantially co-planar with the lateral wall 934. In some embodiments, the first central body portion and the second central body portion can have a similar or the same dimension extending along a direction parallel or substantially parallel to the yaw axis of the UAV, or a height. For example, the upper surface 942 can be co-planar or substantially co-planar with the upper surface 946, and the lower surface 944 can be co-planar or substantially co-planar with the lower surface 948.

As shown in Part B of FIG. 9, the first central body portion 904 can be translationally spaced apart from the second central body portion 906 in the second configuration. For example, the lateral wall 926 of the first central body portion can be spaced apart from the lateral wall 932 of the second central body portion. In some embodiments, the space between the first central body portion and the second central body portion can serve as an additional storage space. For example, the additional storage space can be defined at least in part by the lateral wall 926 and the lateral wall 932. As shown in Part C of FIG. 9, the additional functional module 950 can be positioned between the first central body portion 904 and the second central body portion 906 in the additional storage space. The additional functional module can comprise one or more additional functional modules described herein. In some embodiments, the lateral wall 926 and/or the lateral wall 932 can comprise one or more mechanical and/or electrical interfaces for coupling to the additional functional module 950. The mechanical and/or electrical interfaces can have one or more features as described herein.

One or more of the first central body portion 904 and the second central body portion 906 can move relative to the other to transform the central body 902 between the first configuration and the second configuration. One or more of the first central body portion and the second central body portion can move along a linear or substantially linear path to achieve the transformation. One or more of the first central body portion and the second central body portion can move horizontally to achieve the transformation, such as along a direction parallel or substantially parallel to the roll axis of the UAV 900. For example, one or more of the center of mass of the first central body portion and the center of mass of the second central body portion can move horizontally relative to the other to transform the central body between the first configuration and the second configuration. A horizontal distance between the first central body portion and the second central body portion, and respective components coupled thereto, can change due to the transformation. For example, a horizontal distance between the first central body portion and the second central body portion, and respective components coupled thereto can increase in a transformation from the first configuration to the second configuration. For example, a length of the UAV is greater in the second configuration than in the first configuration. The length of the UAV can increase during a transformation from the first configuration to the second configuration. In some embodiments, a width of the UAV, including a width of the central body, can remain the same or substantially the same during and/or after a transformation between the first and second configurations. For example, a distance between distal portions of the central body can increase during a transformation from the first configuration to the second configuration, while a width of the central body can remain the same or substantially the same. In some embodiments, a length of the UAV can increase by up to about 100% in the second configuration as compared to that in the first configuration, including up to about 90%, up to about 80%, up to about 70%, up to about 60%, up to about 50%, up to about 40%, up to about 30%, up to about 20% or up to about 10%.

All portions of the first central body portion 904 and the second central body portion 906 can remain in the same respective planes before, during and after the transformation. For example, a height of the central body 902 can remain the same or substantially the same during, and/or after the transformation. In some embodiments, the first and second central body portions can maintain the same or substantially the same orientation during and/or after the transformation.

As shown in FIG. 9, the UAV 900 may comprise guide rails 960 coupled to the first central body portion 904 and the second central body portion 906 configured to guide the movement of the first central body portion 904 and/or the second central body portion 906 during the transformation. For example, the guide rails may facilitate movement of the first central body portion and/or the second central body portion along a linear or substantially linear path. The first central body portion and/or the second central body portion may comprise corresponding grooves one or more of lateral walls 924, 934, 928, 938 to mate with the guide rails.

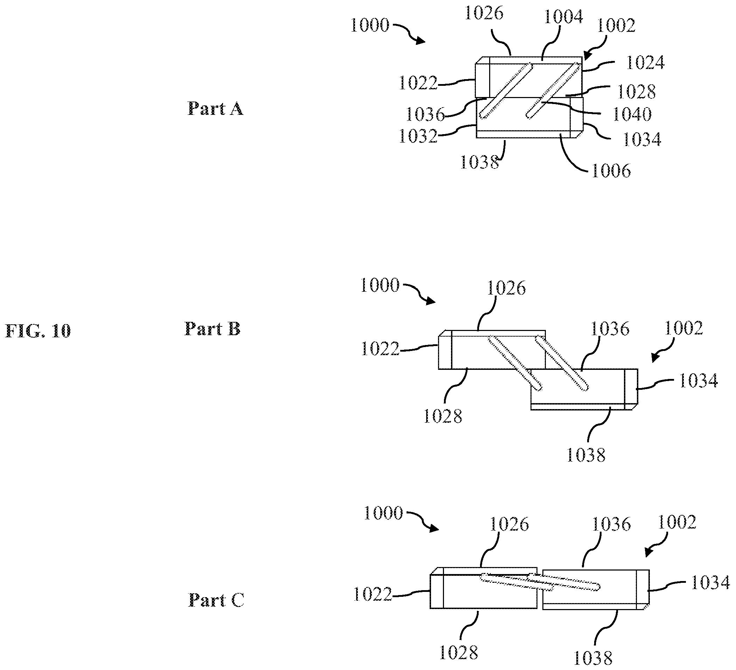

FIG. 10 shows schematic diagrams of a UAV 1000. Part A of FIG. 10 shows the UAV in a first configuration and Part C of FIG. 10 shows the UAV in a second configuration. Part B of FIG. 10 shows the UAV during a transformation between the first configuration and the second configuration. In some embodiments, the UAV can have the first configuration during a non-operation mode. In some embodiments, the UAV can have the second configuration during an operation mode, such as during flight.

The UAV 1000 can have a central body 1002 comprising a first central body portion 1004 and a second central body portion 1006. In the first configuration, the first central body portion can be positioned over the second central body portion, for example the first central body portion and the second central body portion can be positioned one over the other along a direction parallel or substantially parallel to the yaw axis of the UAV. All portions of the first central body portion can be over the second central body portion in the first configuration. In some embodiments, the first central body portion and the second central body portion can share a vertical axis. The vertical axis may be parallel or substantially parallel to the UAV. In some embodiments, the vertical axis can be the yaw axis of the UAV in the first configuration. In some embodiments, a center of mass of the first central body portion can be aligned with a center of mass of the second central body portion along the vertical axis in the first configuration.

In some embodiments, the first central body portion 1004 can have one or more dimensions similar or the same as that of the second central body portion 1006. In some embodiments, the first central body portion 1004 and the second central body portion 1006 can comprise a similar or same dimension spanning along a direction parallel or substantially parallel to the roll axis of the UAV, such as a length. In some embodiments, the first central body portion 1004 and the second central body portion can have a quadrilateral shape such that the first central body portion comprises lateral walls 1022 and 1024, and the second central body portion comprises lateral walls 1032 and 1034. In some embodiments, the first central body portion and second central body portion can each comprise a rectangular or substantially rectangular shape. For example, the first central body portion may comprise opposing lateral walls 1022 and 1024, and the second central body portion may comprise opposing lateral walls 1032 and 1034. The first central body portion can have an upper surface 1026 and a lower surface 1028, and the second central body portion can have an upper surface 1036 and a lower surface 1038. In the first configuration, the first central body portion can be positioned over the second central body portion such that the lower surface 1028 is in contact with the upper surface 1036. In some embodiments, in the first configuration, the lateral wall 1022 can be co-planar or substantially co-planar with the lateral wall 1032.

As shown in Part C of FIG. 10, in the second configuration, the first central body portion 1004 and the second central body portion 1006 can be positioned laterally next to one another, for example one to the side of the other. In the second configuration, the lateral wall 1024 can be positioned proximate to or in contact with the lateral wall 1032. The first central body portion and the second central body portion can be horizontally aligned, for example sharing a horizontal axis. The horizontal axis in the second configuration may extend along a direction parallel or substantially parallel to a roll axis of the UAV 1000. In some embodiments, the horizontal axis can be the roll axis of the UAV in the second configuration. In some embodiments, all portions of the first central body portion are horizontally co-planar or substantially co-planar with corresponding portions of the second central body portion. In some embodiments, the first central body portion and the second central body portion can comprise a similar or same dimension spanning along a direction parallel or substantially parallel to the yaw axis of the UAV, such as a height. For example, in the second configuration, the upper surface 1026 can be co-planar or substantially co-planar with the upper surface 1036 and the lower surface 1038 can be co-planar or substantially co-planar with the lower surface 1028.

In some embodiments, a height of the central body 1002 in the first configuration can be different from that in the second configuration. For example, the height of the central body can be shorter in the second configuration than in the first configuration. In some embodiments, a height of the central body in the second configuration can be up to about 50% that in the first configuration, including up to about 60%, up to about 70%, up to about 80% or up to about 90%. A footprint of the central body can be larger in the second configuration than in the first. In some embodiments, a width of the central body can remain the same or substantially the same during and/or after the transformation. In some embodiments, a length of the central body in the first configuration can be different from that in the second configuration. For example, the length of the central body can be longer in the second configuration than in the first configuration. In some embodiments, a length of the central body in the second configuration can be up to about 50% longer than that in the first configuration, including up to about 60%, up to about 70%, up to about 80% or up to about 90%.

Transforming the UAV 1000 between the first configuration and the second configuration can include both movement along a vertical direction, such as a direction parallel or substantially parallel to the yaw axis of the UAV, and along a horizontal direction, such as a direction parallel or substantially parallel to the roll axis of the UAV. Part B of FIG. 10 shows the UAV during transition between the first configuration and the second configuration. In Part B of FIG. 10, the first central body portion 1004 is displaced relative to the second central body portion 1006. One or more of the first central body portion and the second central body portion can move laterally relative to the other during the transition. For example, transformation between the first configuration and the second configuration can comprise one or more of the first central body portion and the second central body portion moving along a linear path parallel or substantially parallel or substantially parallel to the roll axis of the UAV. In some embodiments, the first and second central body portions can remain in the same orientation during and/or after the transformation. A horizontal distance between corresponding portions of the first central body and the second central body portion, and components coupled thereto, can change during the transformation, such as increase during transformation from the first configuration to the second configuration. For example, a horizontal distance between centers of masses of the first and second central body portions can increase during the transition from the first configuration to the second configuration.

One or more of the first central body portion 1004 and the second central body portion 1006 can move along a horizontal direction until no portion of the first central body portion is disposed over any portion of the second central body portion. One or more of the first central body portion and the second central body portion can then move along a vertical direction, including a direction parallel or substantially parallel to the yaw axis of the UAV 1000. For example, transforming the UAV from the first configuration to the second configuration can comprise moving one or more of the first central body portion and the second central body portion laterally relative to the other until no portion of the first central body portion is positioned above the second central body portion, and then moving one or more of the first central body portion and the second central body portion vertically such that at least a portion of the first central body portion can be horizontally co-planar with at least a portion of the second central body portion 1006. A vertical distance between corresponding portions of the first central body portion and second central body portion, and components coupled thereto, can be smaller in the second configuration than in the first. For example, a vertical distance between centers of masses of the first and second central body portions can decrease during the transition from the first configuration to the second configuration. In some embodiments, one or more of the first central body portion and the second central body portion can be moved vertically until the first central body portion and the second central body portion share a horizontal axis in the second configuration. As described herein, the horizontal axis can be parallel or substantially parallel to the roll axis of the UAV. In some embodiments, the horizontal axis can be the roll axis of the UAV.

In some embodiments, the UAV 1000 can include linkage components 1040 configured to couple the first central body portion 1004 to the second central body portion 1006. The linkage components can be coupled to respective lateral walls of the first central body portion and the second central body portion. The linkage components may be configured to facilitate desired movement of one or more of the first central body portion and the second central body portion, such as vertical and horizontal movement of one or more of the first central body portion and the second central body portion.

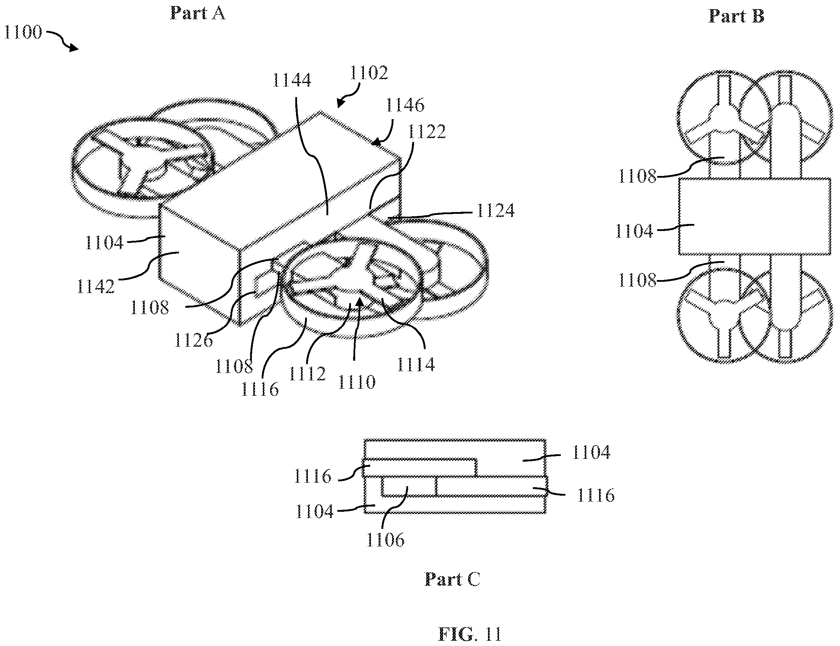

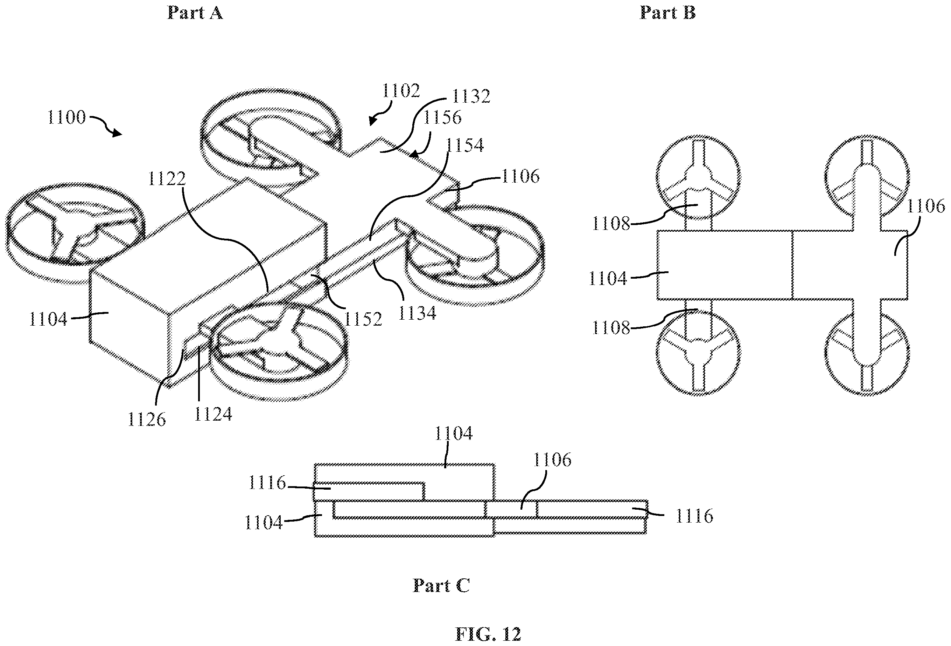

FIG. 11 shows schematic diagrams of a UAV 1100 not according to the appended claims, in a first configuration. FIG. 12 shows schematic diagrams of the UAV not according to the appended claims, in a second configuration. The first configuration can be a space-saving configuration. The UAV can be in the first configuration during a non-operation mode. The second configuration can be an expanded configuration. For example, the UAV can be in the second configuration during an operation mode.

Part A of FIG. 11 is a perspective view of the UAV 1100 in the first configuration. Part B of FIG. 11 is a top-down view of the UAV in the first configuration, and Part C of FIG. 11 is a side view of the UAV 1100. The UAV can include a central body 1102 comprising a first central body portion 1104 and a second central body portion 1106. In the first configuration, at least a portion of the second central body portion can be positioned between two portions of the first central body portion. In some embodiments, the entire or substantially entire second central body portion is positioned between two portions of the first central body portion. The first central body portion may comprise a first surface 1122, a second opposing surface 1124 and a third surface 1126 extending between the first surface 1122 and the second opposing surface 1124 to form a U-shaped space. At least a portion of the second central body portion can be positioned in the U-shaped space between the first surface 1122 and the second surface 1124. For example, a portion of the first central body portion is to a side of the second central body portion, a portion of the first central body portion is above the second central body portion, and a portion of the first central body portion is below the second central body portion. In some embodiments, more than half of the second central body portion can be positioned in the U-shaped space between the first surface 1122 and the second surface 1124. In some embodiments, the entire or substantially entire second central body portion can be positioned within the U-shaped space in the first configuration, thereby providing a reduced footprint for the UAV in the first configuration (e.g., as compared to a UAV having less than the entire second central body portion positioned within the U-shaped space).

In some embodiments, the second central body portion 1106 can have a quadrilateral shape. For example, the second central body portion can have lateral walls 1152, 1154, 1156 and 1158 (not shown). In some embodiments, the second central body portion can have a rectangular or substantially rectangular shape such that adjacent lateral walls are perpendicular or substantially perpendicular to one another. The second central body portion can have an upper surface 1132 and a lower surface 1134. The first central body portion can have lateral walls 1142, 1144, 1146, and 1148 (not shown). In the first configuration, the second central body portion can be inserted within the U-shaped space formed by the first central body portion. For example, the second central body portion can be inserted within the U-shaped space such that the lateral wall 1152 is in contact with the surface 1126. The upper surface 1132 may be in contact with the surface 1122 and the lower surface 1134 may be in contact with the surface 1124. In some embodiments, the entire or substantially entire second central body portion can be positioned within the U-shaped space in the first configuration such that the lateral wall 1156 of the second central body portion is co-planar or substantially co-planar with the lateral wall 1146 of the first central body portion.

Each of the first central body portion 1104 and the second central body portion 1106 can comprise a plurality of arms 1108 extending therefrom. For example, the first central body portion may comprise a first arm extending from the lateral wall 1144 and a second arm extending from the lateral wall 1148. The second central body portion can comprise a first arm extending from the lateral wall 1154 and a second arm can extend from the lateral wall 1158. Each of the arms can be configured to support respective propulsion units 1110. A propulsion unit can comprise a rotor 1112 and a set of rotor blades 1114 coupled to the rotor. Each of the arms may be coupled to a rotor blades guard 1116 configured to protect one or more components of the propulsion units, such as the rotor blades. In some embodiments, the propulsion units supported on the arms extending from the second central body portion are oriented in an opposing direction relative to the propulsion units supported on the arms extending from the first central body portion. For example, rotor blades of the propulsion units coupled to the arms extending from the second central body portion faces away from the rotor blades of propulsion units coupled to the arms extending from the first central body portion, such as in a direction opposite that of the propulsion units coupled to the arms extending from the first central body portion. As shown in Part A of FIG. 11, the arms may extend from the first central body portion at a position laterally offset from the arms extending from the second central body portion.

Part A of FIG. 12 is a perspective view of the UAV 1100 in the second configuration. In the second configuration, at least a portion of the second central body portion 1106 is positioned outside of the U-shaped space. In the second configuration, the first central body portion 1104 can be translationally displaced relative to the second central body portion. For example, one or more of the first central body portion and the second central body portion can move translationally relative to the other to transform the UAV between the first configuration and the second configuration. A center of mass of one or more of the first central body portion and the second central body portion can move translationally relative to the other to transform the UAV between the first configuration and the second configuration. The first central body portion and the second central body portion can remain in the same orientation during and/or after the transformation. In some embodiments, one or more of the first central body portion and the second central body portion can move linearly or substantially linearly relative to the other to transform the central body 1102 between the first configuration and second configuration. In some embodiments, one or more of the first central body portion and the second central body portion can move along a path comprising both a linear or substantially linear portion, and a curved portion during the transformation. One or more of the first central body portion and the second central body portion can move horizontally to transform the central body between the first and second configurations. For example, a vertical distance between the first central body portion and the second central body portion, and the arms 1108, propulsion units 1110 and rotor blades guards 1116 coupled thereto can remain the same or substantially the same during the transformation. The vertical distance between the first central body portion and the second central body portion, and the arms, propulsion units and rotor blades guards coupled thereto can be the same or substantially the same in the first configuration and the second configuration. The vertical distance may extend along a direction parallel or substantially parallel to the yaw axis of the UAV. For example, a height of the central body can remain the same or substantially the same during and after the transformation.

A horizontal distance between arms 1108 extending from lateral walls 1124 and 1134, and between arms 1108 extending from lateral walls 1128 and 1138, are greater in the second configuration than in the first configuration, while the vertical distance remains the same or substantially the same. The horizontal distance may extend along a direction parallel or substantially parallel to the roll axis of the UAV 1100. For example, a length of the central body 1102 can be greater in the second configuration than in the first. In some embodiments, the length can be up to about 90% greater in the second configuration, up to about 80% greater up to about 70% greater, up to about 60% greater, up to about 50% greater, up to about 40% greater, up to about 30% greater, up to about 20% greater, or up to about 10% greater. In some embodiments, a width of the central body can remain the same or substantially the same during and after the transformation.

In some embodiments, the UAV 1100 in the second configuration can comprise one or more additional storage spaces not present in the first configuration. In some embodiments, the central body 1102 can comprise one or more additional storage spaces in the second configuration, the one or more additional storage spaces being at least partially defined by one or more surfaces of the first central body portion 1104 and one or more surfaces of the second central body portion 1106. The first central body portion can be displaced relative to the second central body portion, such that at least a portion of the surfaces 1122, 1124, 1126 of the first central body portion 1104, and the lateral wall 1152 of the second central body portion can define at least in part a space no present in the first configuration. One or more functional modules may be received in the additional storage space. For example, the one or more functional modules can be coupled to the central body via one or more mechanical and/or electrical interfaces on the surfaces 1122, 1124, 1126 and/or the lateral wall 1152.

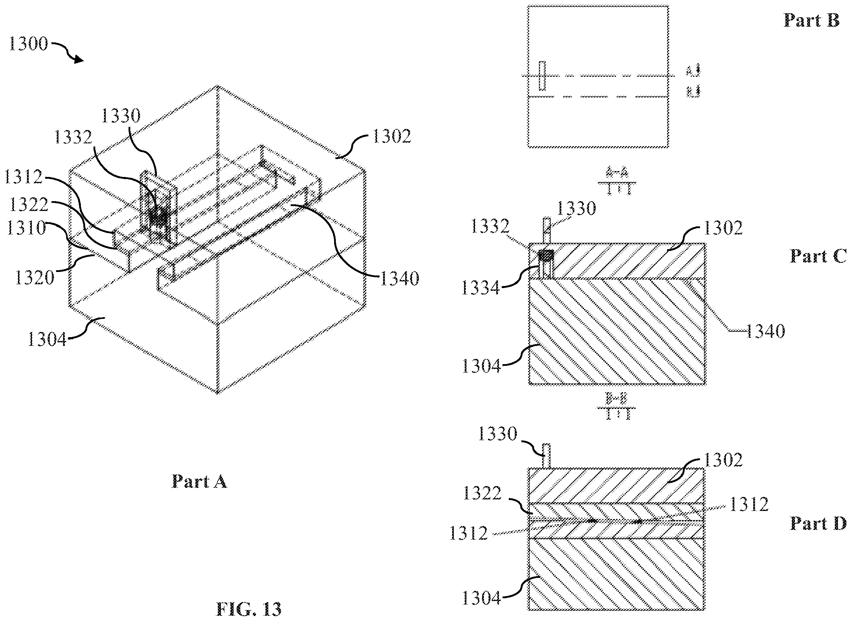

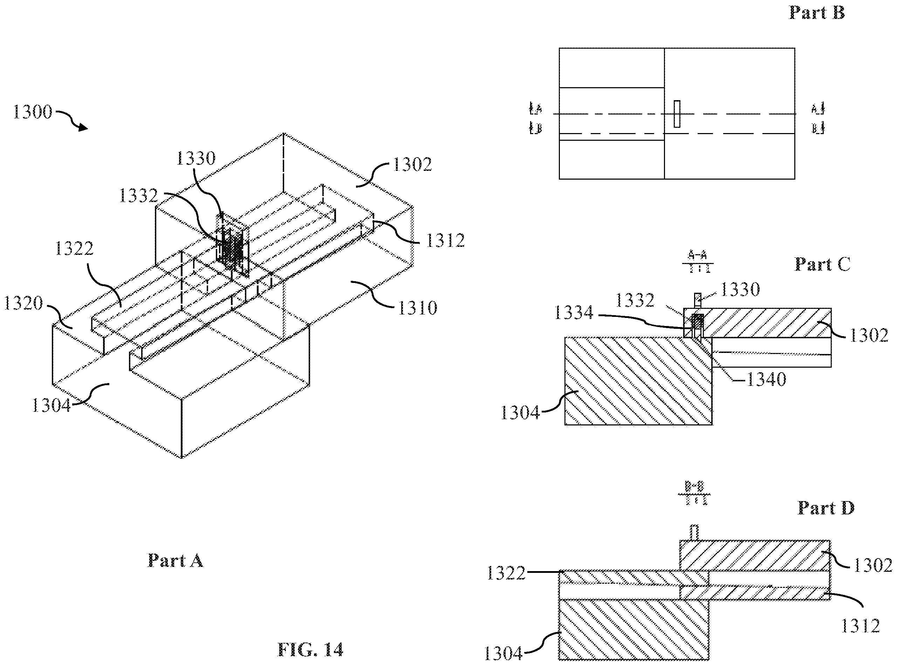

FIG. 13 shows schematic diagrams of a central body 1300 in a first configuration. FIG. 14 shows schematic diagrams of the central body in a second configuration. The first configuration may be a space-saving configuration while the second configuration may be an expanded configuration. The central body may be an example of one or more of the central bodies described with reference to FIGs. 1-12.

Part A of FIG. 13 is a perspective view of the central body 1300 in the first configuration. The central body can have a first central body portion 1302 and a second central body portion 1304. As shown in Part A of FIG. 13, the first central body portion can be positioned over the second central body portion. The second central body portion can have an upper surface 1320. The second central body portion can have a guide rail 1322 on its upper surface 1320. The guide rail may protrude from the second central body portion along at least a portion of a dimension of the second central body portion, such as a length of the second central body portion. In some embodiments, the guide rail may protrude from the second central body portion along an entire or substantially an entire dimension of the second central body portion. For example, the guide rail may protrude from the second central body portion along an entire or substantially an entire length of the second central body portion. In some embodiments, the guide rail can have a T-shape. The guide rail may have another suitable shape, including for example an L-shape.

The first central body portion 1302 can have a corresponding recess 1312 on a lower surface 1310, the recess being positioned and dimensioned to receive the guide rail 1322. As shown in Part A of FIG. 13, the recess can have a T-shaped recess on its lower surface. The T-shaped recess may extend along an entire or substantially entire length of the first central body portion.

The guide rail 1322 can mate with the recess 1312 such that the first central body portion 1302 and the second central body portion 1304 can maintain a desired position relative to one another, and/or movement of one or more of the first central body portion and the second central body portion relative to the other can be guided by the guide rail. For example, one or more of the first central body portion and the second central body portion can move along a linear or substantially linear path relative to the other guided by the guide rail.

As described in further details herein, central body 1300 may comprise a locking mechanism configured to maintain the central body 1300 in the second configuration. In some embodiments, the locking mechanism may comprise a spring-loaded rod 1332 and a rod-receiving recess 1340. In some embodiments, the central body may comprise a different type of locking mechanism, including for example at least one of a latching mechanism, a socket and plug mechanism and an electromagnetic coupling mechanism.

Part C of FIG. 13 is a cross-sectional view of the central body 1300 in the first configuration along cross-sectional line A shown in Part B of FIG. 13, while Part D of FIG. 13 is a cross-sectional view of the central body along cross-sectional line B shown in Part B of FIG. 13.

The central body 1300 can comprise a locking mechanism configured to maintain the central body in a desired configuration. In some embodiments, the central body can comprise a locking mechanism configured to maintain the central body in the second configuration. The locking mechanism may comprise a spring-loaded rod 1332 comprising a portion configured to be received in a corresponding rod-receiving recess 1340 when the central body is in the second configuration. Part C of FIG. 13 shows the lever 1330, the spring-loaded rod 1332, and the rod-receiving recess of the second central body portion. In the first configuration, the spring-loaded rod remains within a recess 1334 of the first central body portion 1302. Part C of FIG. 13 shows the mating between the guide rail 1322 protruding from the second central body portion 1304 and the corresponding recess 1312 of the first central body portion 1302. In some embodiments, the guide rail and the corresponding recess may comprise corresponding slopes. For example, the guide rail and the corresponding recess may comprise a slope to facilitate maintaining the first central body portion and the second central body portion in desired positions relative to one another as one or more of the first central body portion and the second central body portion are moved relative to the other guided by the guide rail.

Part A of FIG. 14 is a perspective view of the central body 1300 in the second configuration. The first central body portion 1302 is displaced relative to the second central body portion 1304. As shown in Part A of FIG. 14, the guide rail 1322 of the second central body portion 1304 is received within the corresponding recess 1312 of the first central body portion.

Part C of FIG. 14 is a cross-sectional view of the central body 1300 in the second configuration along cross-sectional line A shown in Part B of FIG. 14, while Part D of FIG. 14 is a cross-sectional view of the central body along cross-sectional line B shown in Part B of FIG. 14. Part C of FIG. 14 shows the lever 1330 and the spring-loaded rod 1332. A portion of the spring-loaded rod extends from the recess 1334 and the portion of the spring-loaded rod is received in the rod-receiving recess 1340 of the second central body portion 1304. A portion of the spring-loaded rod can be inserted into the rod-receiving recess of the second central body portion to facilitate maintaining the central body in the second configuration. For example, as one or more of the first central body portion 1302 and the second central body portion move relative to the other, the spring-loaded rod can be moved to be in alignment with the rod-receiving recess such that a portion of the spring-loaded rod extends from the lower surface 1310 of the first central body portion and is inserted within the rod-receiving recess of the second central body portion. In some embodiments, the lever 1330 can be manually activated by a user to insert or further insert the spring-loaded rod into the rod-receiving recess. For example, the user may apply a force upon the lever to push the spring-loaded rod into or further into the rod-receiving recess. Mating of the spring-loaded rod and the rod-receiving recess can facilitate maintaining the first central body portion at a fixed position relative to the second central body portion.

Referring to Part D of FIG. 14, the respective sloped profile of the guide rail 1322 and the corresponding recess 1312 is shown. The sloped profile of the recess and the sloped profile of the guide rail may be selected to facilitate maintaining the first central body portion 1302 and the second central body portion 1304 at desired positions relative to one another as the two are moved relative to one another.

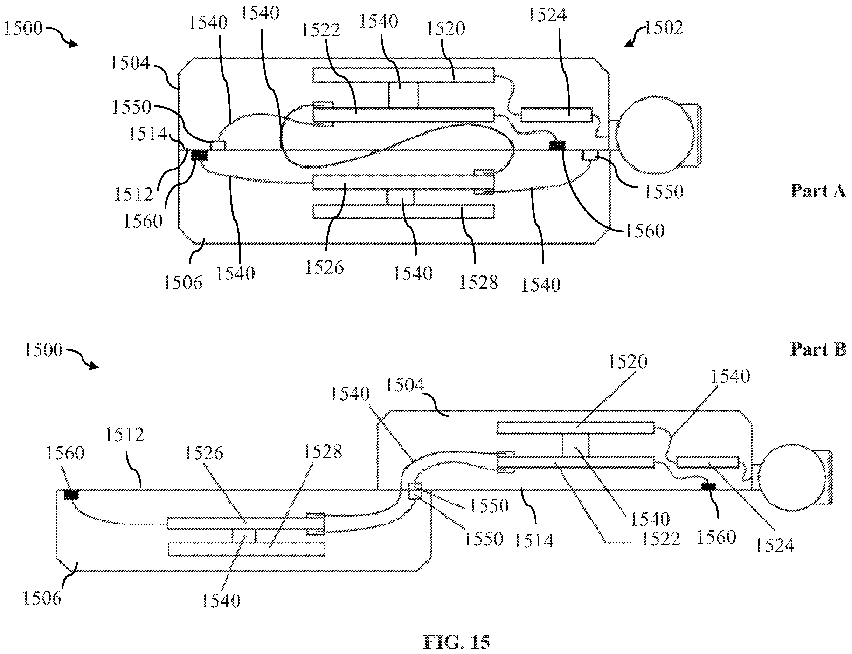

FIG. 15 shows schematic diagrams of cross-sectional views of a central body 1500 according to some embodiments. The central body can be an example of one or more central bodies described with reference to FIGs. 1-14. The central body can comprise a first central body portion 1502 and a second central body portion 1504. Part A of FIG. 15 shows the central body in a first configuration and Part B of FIG. 15 shows the central body in a second configuration. The first configuration can be a space-saving configuration. The second configuration can be an expanded configuration. The central body may comprise one or more internal spaces configured to house one or more electronic components of a UAV. The one or more electronic components may be housed within an internal space of the first central body portion or an internal space of the second central body portion. The one or more electronic components may comprise one or more of a flight controller, image processor, electronic speed controller (ESC) and payload controller. Some of the electronic components can be housed within the first central body portion, while the other electronic components may be housed within the second central body portion.

In some embodiments, the first central body portion 1502 may comprise an image processor 1520 and a payload controller 1524. In some embodiments, the second central body portion 1504 may comprise a flight controller 1528. In some embodiments, the electronic speed controller may be housed within both the first central body portion and the second central body portion. For example, the first central body portion may comprise an upper electronic speed controller 1522 and the second central body portion may comprise a lower electronic speed controller 1526. In some embodiments, the upper electronic speed controller may be configured to control one or more propulsion units coupled to an arm extending from the first central body portion. In some embodiments, the lower electronic speed controller may be configured to control one or more propulsion units coupled to an arm extending from the second central body portion. In some embodiments, the electronic speed controller may be housed within either the first central body portion or the second central body portion. Data and/or control signals can be transmitted between one or more of these electronic components during operation of the UAV. For example, the flight controller may be in electrical communication with one or more of the electronic speed controllers and image processor such that control signals generated by the flight controller can be provided the electronic speed controllers and/or image processor, and/or information can be provided from the electronic speed controllers and/or image processor to the flight controller. The image processor may be in communication with one or more payloads carried by the UAV to receive and process image data captured by the device. In some embodiments, the one or more payloads comprises an image capturing device (e.g., a camera, smartphone, or other imaging-enabled mobile device). In some embodiments, the payload controller may be in communication with the payload and/or a payload support, where the payload controller can be configured to generate control signals for adjusting the position and/or orientation of the payload and/or payload support. In some embodiments, the payload controller can be configured to generate control signals for controlling a function of the payload, such as a function of an imaging device, including a record function, zoom in function, zoom out function, power on function, power off function, change of focus function, and/or change of field of view function.

Electrical communication between the first central body portion 1502 and the second central body portion 1504, and/or within the first central body portion and the second central body portion can be provided by one or more communication cables 1540. The communication cables may comprise a flexible printed cable (FPC) and/or a coaxial cable. In some embodiments, the communication cables can provide communication between one or more electronic components within the first central body and/or between one or more electronic components within the second central body portion. In some embodiments, the communication cables can provide communication between the first central body portion and the second central body portion.

In some embodiments, the first central body portion 1502 can comprise a lower surface 1514 and the second central body portion 1504 can comprise an upper surface 1512. The lower surface and the upper surface may each comprise respective electrical contacts 1560 and power-on contacts 1550. The electrical contacts may be configured to contact an energy source positioned in contact with the upper surface and/or the lower surface. For example, the electrical contacts may be configured to provide electrical communication between the central body and one or more functional modules positioned on the upper surface and/or the lower surface. In some embodiments, the one or more functional modules may comprise one or more batteries, such as one or more auxiliary batteries. The electrical contacts may provide electrical communication between the one or more batteries and the central body such that the one or more batteries can power the UAV 1500.

The power-on contacts 1550 may be configured to control powering on and/or powering off of the UAV 1500. For example, the UAV can be configured to power on if the power-on contact on the upper surface 1512 is in contact with the power-on contact on the lower surface 1514. In some embodiments, the UAV may remain powered while the power-on contacts are in contact with one another. In some embodiments, loss of contact between the power-on contacts on the upper surface and the lower surface can trigger powering off of the UAV.

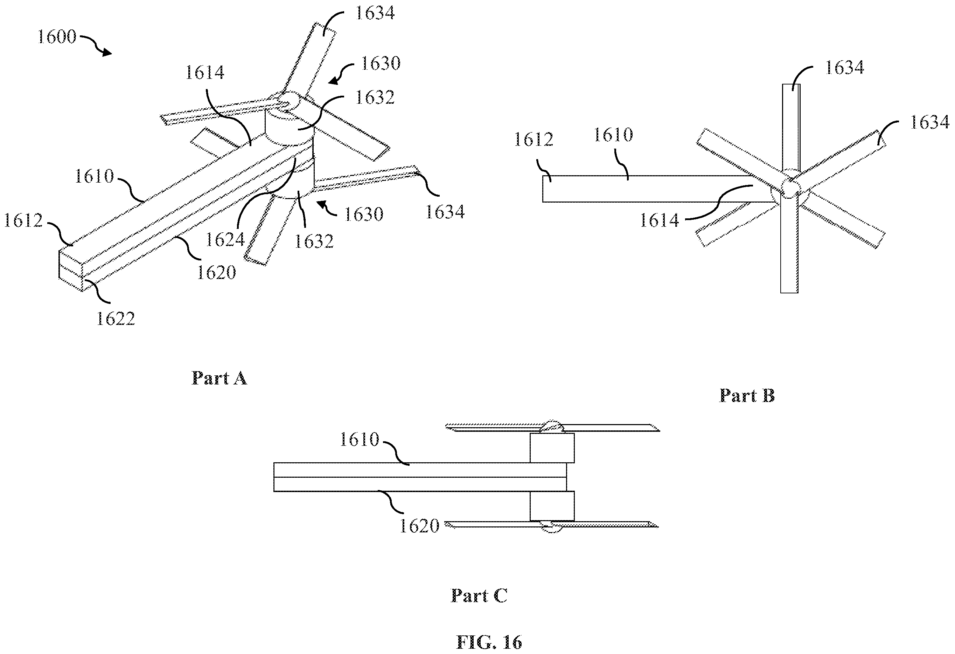

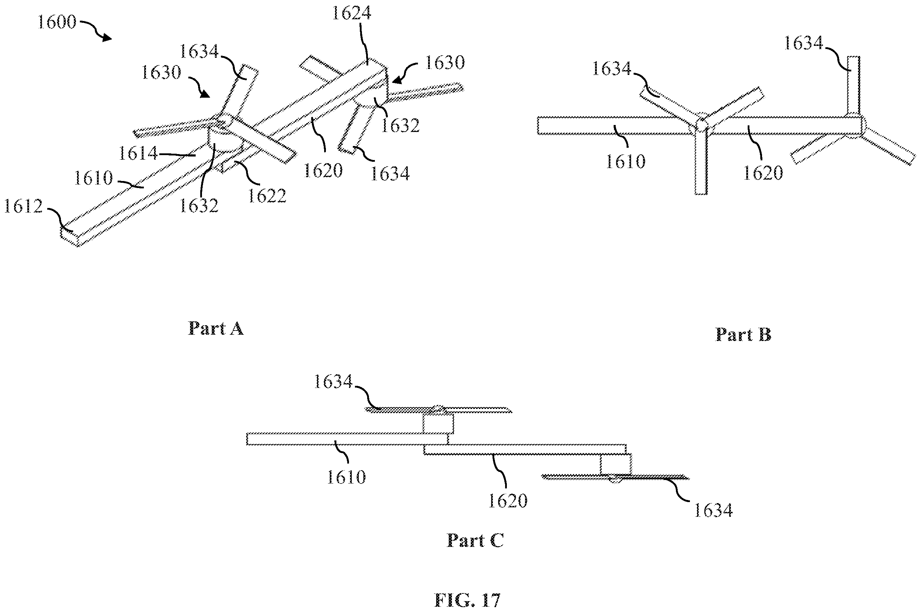

FIG. 16 shows schematic diagrams of a transformable arm 1600 in a first configuration. FIG. 17 shows schematic diagrams of the transformable arm in a second configuration. The first configuration can be a space-saving configuration. The second configuration can be an expanded configuration. One or more UAVs described herein can comprise one or more of the transformable arms. For example, one or more of the UAVs described herein can comprise a plurality of the transformable arms extending from a central body. In some embodiments, one or more of the UAVs described herein can comprise three or more of the transformable arms extending from a central body, including four, five, six or more. The transformable arm can include a plurality of portions at least one of which configured to move relative to one or more of the other plurality of portions to transform the transformable arm between the first and second configurations.

The transformable arm 1600 can comprise a first arm portion 1610 and a second arm portion 1620. Each of the first arm portion and second arm portion can be discrete and separable portions. For example, one or more of the first arm portion and second arm portion can be separated from and moved relative to the other, to transform the transformable arm between the first and second configurations. One or more of the first arm portion and second arm portion can be moved relative to the other such that the center of mass of the one or more of the first arm portion and second arm portion can move relative to that of the other arm portion.

In some embodiments, one or more of the first arm portion 1610 and second arm portion 1620 can be a discrete portion configured to enclose or substantially enclose therein an internal space for receiving one or more components for enabling operation of the UAV, including one or more electronic components and/or one or more components to provide electrical communication between the electronic components. For example, each of the first arm portion and second arm portion can be configured to provide therein a respective internal space.

In the first configuration, the first arm portion 1610 can disposed over the second arm portion 1620. The first arm portion can have a proximal portion 1612 configured to be proximate to a central body of a UAV and a distal portion 1614 configured to be distal from the central body. The second arm portion can have a proximal portion 1622 configured to be proximate to the central body and a distal portion 1624 configured to be distal from the central body. In the first configuration, the distal portion of the first arm portion can be disposed over the distal portion of the second arm portion and the proximal portion of the first arm portion can be disposed over the proximal portion of the second arm portion. The first arm portion may be disposed over and in alignment with the second arm portion. For example, a longitudinal axis of the first arm portion can be positioned over and parallel or substantially parallel to a longitudinal axis of the second arm portion in the first configuration.

The first arm portion 1610 and the second arm portion 1620 can each be configured to support a respective propulsion unit 1630. Each of the propulsion units may comprise a rotor 1632 coupled to a set of rotor blades 1634. The propulsion units can be supported between corresponding distal ends and proximal ends of the first arm portion and second arm portion. In some embodiments, the propulsion units can be supported at distal ends 1614, 1624. As shown in Part A of FIG. 16, the propulsion unit 1630 supported on the first arm portion can be oriented in an opposing direction relative to the propulsion unit supported on the second arm portion such that the set of rotor blades coupled to the first arm portion faces away from the set of rotor blades coupled to the second arm portion.

Part B of FIG. 16 is top-down view of the transformable arm 1600 in the first configuration. The first arm portion 1610 is shown. The set of rotor blades 1634 supported on the first arm portion and the set of rotor blades 1634 supported on the second arm portion 1620 are shown in Part B of FIG. 16. Part C of FIG. 16 shows a side view of the transformable arm 1600. As shown in Part C of FIG. 16, the first arm portion is disposed over the second arm portion. The propulsion unit 1630 supported on the first portion can be oriented in an opposing direction relative to the propulsion unit 1630 supported on the second arm portion such that the set of propeller blades coupled to the first arm portion is oriented in a direction opposite that of the set of propeller blades coupled to the second arm portion.

Part A of FIG. 17 is a perspective view of the transformable arm 1600 in the second configuration. In the second configuration, the first arm portion 1610 and the second arm portion 1620 are translationally displaced relative to one another. One or more of the first arm portion and the second arm portion may move relative to the other such that the distal portion 1614 of the first arm portion may be disposed over the proximal portion 1622 of the second arm portion. In the second configuration, the first arm portion may be proximate to a central body of the UAV and the second arm portion may be distal from the central body of the UAV. For example, the transformable arm may be the second configuration during operation of the UAV, such as during flight of the UAV. One or more of the first arm portion and the second arm portion can be configured to move relative to the other without rotating relative to the other. For example, one or more of the first arm portion and the second arm portion can move along a linear or substantially linear path to transform the transformable arm between the first and second configurations. Transforming the transformable arm between the first and second configurations can comprise moving one or more of the first arm portion and the second arm portion along a linear or substantially linear path parallel or substantially parallel to a longitudinal axis of the first arm portion, second arm portion and/or transformable arm.

Part B of FIG. 17 is a top-down view of the second configuration and Part C of FIG. 17 is a side view of the second configuration. As shown in Parts B and C of FIG. 17, the propulsion units 1630 supported on the first arm portion 1610 and the second arm portion 1620 can be translationally displaced from one another in the second configuration.

In some embodiments, at least one of the first arm portion 1610 and the second arm portion 1620 comprises at least one locking mechanism to maintain the first arm portion and the second arm portion in the first configuration or the second configuration. In some embodiments, at least one of the first and second arm portions comprises at least one of a mechanical and electrical interfaces to provide at least one of physical and electrical communication between the first arm portion and second arm portion, and/or between the first and second arm portions and other components of the UAV, such as the central body of the UAV.

In some embodiments, one or more movable objects, such as UAVs, described herein can be configured to carry a load. The load can include one or more of passengers, cargo, equipment, instruments, and the like. The load can be provided within a housing. The housing may be separate from a housing of the movable object, or be part of a housing for a movable object. Alternatively, the load can be provided with a housing while the movable object does not have a housing. Alternatively, portions of the load or the entire load can be provided without a housing. The load can be rigidly fixed relative to the movable object. Optionally, the load can be movable relative to the movable object (e.g., translatable or rotatable relative to the movable object). The load can include a payload and/or a carrier, as described elsewhere herein.

In some embodiments, the movement of the movable object, carrier, and payload relative to a fixed reference frame (e.g., the surrounding environment) and/or to each other, can be controlled by a terminal. The terminal can be a remote control device at a location distant from the movable object, carrier, and/or payload. The terminal can be disposed on or affixed to a support platform. Alternatively, the terminal can be a handheld or wearable device. For example, the terminal can include a smartphone, tablet, laptop, computer, glasses, gloves, helmet, microphone, or suitable combinations thereof. The terminal can include a user interface, such as a keyboard, mouse, joystick, touchscreen, or display. Any suitable user input can be used to interact with the terminal, such as manually entered commands, voice control, gesture control, or position control (e.g., via a movement, location or tilt of the terminal).

The terminal can be used to control any suitable state of the movable object, carrier, and/or payload. For example, the terminal can be used to control the position and/or orientation of the movable object, carrier, and/or payload relative to a fixed reference from and/or to each other. In some embodiments, the terminal can be used to control individual elements of the movable object, carrier, and/or payload, such as the actuation assembly of the carrier, a sensor of the payload, or an emitter of the payload. The terminal can include a wireless communication device adapted to communicate with one or more of the movable object, carrier, or payload.

The terminal can include a suitable display unit for viewing information of the movable object, carrier, and/or payload. For example, the terminal can be configured to display information of the movable object, carrier, and/or payload with respect to position, translational velocity, translational acceleration, orientation, angular velocity, angular acceleration, or any suitable combinations thereof. In some embodiments, the terminal can display information provided by the payload, such as data provided by a functional payload (e.g., images recorded by a camera or other image capturing device).

Optionally, the same terminal may both control the movable object, carrier, and/or payload, or a state of the movable object, carrier and/or payload, as well as receive and/or display information from the movable object, carrier and/or payload. For example, a terminal may control the positioning of the payload relative to an environment, while displaying image data captured by the payload, or information about the position of the payload. Alternatively, different terminals may be used for different functions. For example, a first terminal may control movement or a state of the movable object, carrier, and/or payload while a second terminal may receive and/or display information from the movable object, carrier, and/or payload. For example, a first terminal may be used to control the positioning of the payload relative to an environment while a second terminal displays image data captured by the payload. Various communication modes may be utilized between a movable object and an integrated terminal that both controls the movable object and receives data, or between the movable object and multiple terminals that both control the movable object and receives data. For example, at least two different communication modes may be formed between the movable object and the terminal that both controls the movable object and receives data from the movable object.

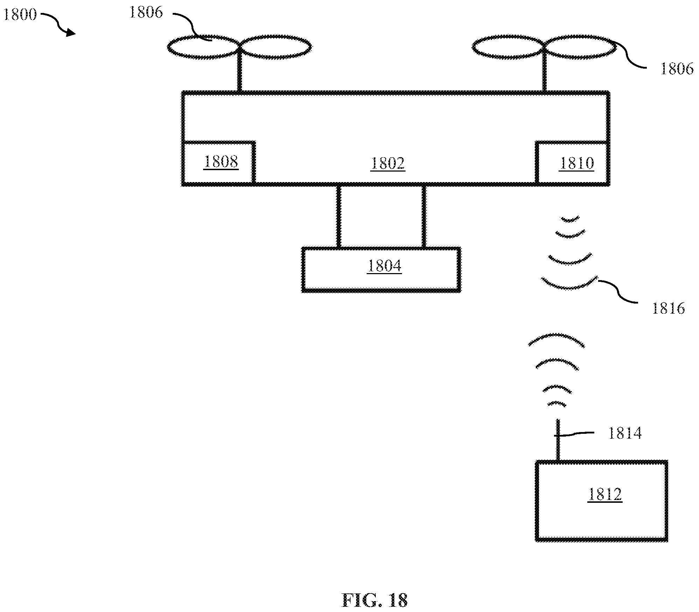

FIG. 18 illustrates a movable object 1800 including a carrier 1802 and a payload 1804, in accordance with embodiments. Although the movable object 1800 is depicted as an aircraft, this depiction is not intended to be limiting, and any suitable type of movable object can be used, as previously described herein. One of skill in the art would appreciate that any of the embodiments described herein in the context of aircraft systems can be applied to any suitable movable object (e.g., a UAV), including a UAV as described herein. In some instances, the payload 1804 may be provided on the movable object 1800 without requiring the carrier 1802. The movable object 1800 may include propulsion mechanisms 1806, a sensing system 1808, and a communication system 1810.

The propulsion mechanisms 1806 can include one or more of rotors, propellers, blades, engines, motors, wheels, axles, magnets, or nozzles, as previously described. For example, the propulsion mechanisms 1806 may be self-tightening rotors, rotor assemblies, or other rotary propulsion units, as disclosed elsewhere herein. The movable object may have one or more, two or more, three or more, or four or more propulsion mechanisms. The propulsion mechanisms may all be of the same type. Alternatively, one or more propulsion mechanisms can be different types of propulsion mechanisms. The propulsion mechanisms 1806 can be mounted on the movable object 1800 using any suitable means, such as a support element (e.g., a drive shaft) as described elsewhere herein. The propulsion mechanisms 1806 can be mounted on any suitable portion of the movable object 1800, such on the top, bottom, front, back, sides, or suitable combinations thereof.

In some embodiments, the propulsion mechanisms 1806 can enable the movable object 1800 to take off vertically from a surface or land vertically on a surface without requiring any horizontal movement of the movable object 1800 (e.g., without traveling down a runway). Optionally, the propulsion mechanisms 1806 can be operable to permit the movable object 1800 to hover in the air at a specified position and/or orientation. One or more of the propulsion mechanism 1800 may be controlled independently of the other propulsion mechanisms. Alternatively, the propulsion mechanisms 1800 can be configured to be controlled simultaneously. For example, the movable object 1800 can have multiple horizontally oriented rotors that can provide lift and/or thrust to the movable object. The multiple horizontally oriented rotors can be actuated to provide vertical takeoff, vertical landing, and hovering capabilities to the movable object 1800. In some embodiments, one or more of the horizontally oriented rotors may spin in a clockwise direction, while one or more of the horizontally rotors may spin in a counterclockwise direction. For example, the number of clockwise rotors may be equal to the number of counterclockwise rotors. The rotation rate of each of the horizontally oriented rotors can be varied independently in order to control the lift and/or thrust produced by each rotor, and thereby adjust the spatial disposition, velocity, and/or acceleration of the movable object 1800 (e.g., with respect to up to three degrees of translation and up to three degrees of rotation).

The sensing system 1808 can include one or more sensors that may sense the spatial disposition, velocity, and/or acceleration of the movable object 1800 (e.g., with respect to up to three degrees of translation and up to three degrees of rotation). The one or more sensors can include any of the sensors previously described herein, including GPS sensors, motion sensors, inertial sensors, proximity sensors, or image sensors. The sensing data provided by the sensing system 1808 can be used to control the spatial disposition, velocity, and/or orientation of the movable object 1800 (e.g., using a suitable processing unit and/or control module, as described below). Alternatively, the sensing system 1808 can be used to provide data regarding the environment surrounding the movable object, such as weather conditions, proximity to potential obstacles, location of geographical features, location of manmade structures, and the like.

The communication system 1810 enables communication with terminal 1812 having a communication system 1814 via wireless signals 1816. The communication systems 1810, 1814 may include any number of transmitters, receivers, and/or transceivers suitable for wireless communication. The communication may be one-way communication, such that data can be transmitted in only one direction. For example, one-way communication may involve only the movable object 1800 transmitting data to the terminal 1812, or vice-versa. The data may be transmitted from one or more transmitters of the communication system 1810 to one or more receivers of the communication system 1812, or vice-versa. Alternatively, the communication may be two-way communication, such that data can be transmitted in both directions between the movable object 1800 and the terminal 1812. The two-way communication can involve transmitting data from one or more transmitters of the communication system 1810 to one or more receivers of the communication system 1814, and vice-versa.

In some embodiments, the terminal 1812 can provide control data to one or more of the movable object 1800, carrier 1802, and payload 1804 and receive information from one or more of the movable object 1800, carrier 1802, and payload 1804 (e.g., position and/or motion information of the movable object, carrier or payload; data sensed by the payload such as image data captured by a payload camera). In some instances, control data from the terminal may include instructions for relative positions, movements, actuations, or controls of the movable object, carrier and/or payload. For example, the control data may result in a modification of the location and/or orientation of the movable object (e.g., via control of the propulsion mechanisms 1806), or a movement of the payload with respect to the movable object (e.g., via control of the carrier 1802). The control data from the terminal may result in control of the payload, such as control of the operation of a camera or other image capturing device (e.g., taking still or moving pictures, zooming in or out, turning on or off, switching imaging modes, change image resolution, changing focus, changing depth of field, changing exposure time, changing viewing angle or field of view). In some instances, the communications from the movable object, carrier and/or payload may include information from one or more sensors (e.g., of the sensing system 1808 or of the payload 1804). The communications may include sensed information from one or more different types of sensors (e.g., GPS sensors, motion sensors, inertial sensor, proximity sensors, or image sensors). Such information may pertain to the position (e.g., location, orientation), movement, or acceleration of the movable object, carrier and/or payload. Such information from a payload may include data captured by the payload or a sensed state of the payload. The control data provided transmitted by the terminal 1812 can be configured to control a state of one or more of the movable object 1800, carrier 1802, or payload 1804. Alternatively or in combination, the carrier 1802 and payload 1804 can also each include a communication module configured to communicate with terminal 1812, such that the terminal can communicate with and control each of the movable object 1800, carrier 1802, and payload 1804 independently.

In some embodiments, the movable object 1800 can be configured to communicate with another remote device in addition to the terminal 1812, or instead of the terminal 1812. The terminal 1812 may also be configured to communicate with another remote device as well as the movable object 1800. For example, the movable object 1800 and/or terminal 1812 may communicate with another movable object, or a carrier or payload of another movable object. When desired, the remote device may be a second terminal or other computing device (e.g., computer, laptop, tablet, smartphone, or other mobile device). The remote device can be configured to transmit data to the movable object 1800, receive data from the movable object 1800, transmit data to the terminal 1812, and/or receive data from the terminal 1812. Optionally, the remote device can be connected to the Internet or other telecommunications network, such that data received from the movable object 1800 and/or terminal 1812 can be uploaded to a website or server.

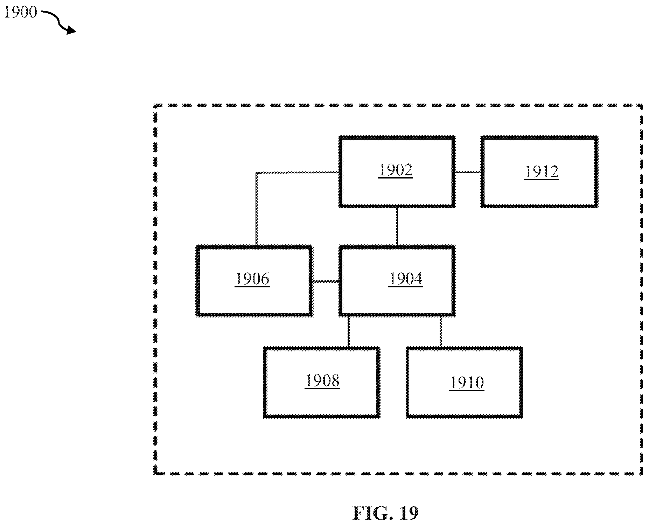

FIG. 19 is a schematic illustration by way of block diagram of a system 1900 for controlling a movable object, in accordance with embodiments. A movable object may include a UAV as described herein. The system 1900 can be used in combination with any suitable embodiment of the systems, devices, and methods disclosed herein. The system 1900 can include a sensing module 1902, processing unit 1904, non-transitory computer readable medium 1906, control module 1908, and communication module 1910.

The sensing module 1902 can utilize different types of sensors that collect information relating to the movable objects in different ways. Different types of sensors may sense different types of signals or signals from different sources. For example, the sensors can include inertial sensors, GPS sensors, proximity sensors (e.g., lidar), or vision/image sensors (e.g., a camera). The sensing module 1902 can be operatively coupled to a processing unit 1904 having a plurality of processors. In some embodiments, the sensing module can be operatively coupled to a transmission module 1912 (e.g., a Wi-Fi image transmission module) configured to directly transmit sensing data to a suitable external device or system. For example, the transmission module 1912 can be used to transmit images captured by a camera of the sensing module 1902 to a remote terminal.

The processing unit 1904 can have one or more processors, such as a programmable processor (e.g., a central processing unit (CPU)). The processing unit 1904 can be operatively coupled to a non-transitory computer readable medium 1906. The non-transitory computer readable medium 1906 can store logic, code, and/or program instructions executable by the processing unit 1904 for performing one or more steps. The non-transitory computer readable medium can include one or more memory units (e.g., removable media or external storage such as an SD card or random access memory (RAM)). In some embodiments, data from the sensing module 1902 can be directly conveyed to and stored within the memory units of the non-transitory computer readable medium 1906. The memory units of the non-transitory computer readable medium 1906 can store logic, code and/or program instructions executable by the processing unit 1904 to perform any suitable embodiment of the methods described herein. For example, the processing unit 1904 can be configured to execute instructions causing one or more processors of the processing unit 1904 to analyze sensing data produced by the sensing module. The memory units can store sensing data from the sensing module to be processed by the processing unit 1904. In some embodiments, the memory units of the non-transitory computer readable medium 1906 can be used to store the processing results produced by the processing unit 1904.

In some embodiments, the processing unit 1904 can be operatively coupled to a control module 1908 configured to control a state of the movable object. For example, the control module 1908 can be configured to control the propulsion mechanisms of the movable object to adjust the spatial disposition, velocity, and/or acceleration of the movable object with respect to six degrees of freedom. Alternatively or in combination, the control module 1908 can control one or more of a state of a carrier, payload, or sensing module.

The processing unit 1904 can be operatively coupled to a communication module 1910 configured to transmit and/or receive data from one or more external devices (e.g., a terminal, display device, or other remote controller). Any suitable means of communication can be used, such as wired communication or wireless communication. For example, the communication module 1910 can utilize one or more of local area networks (LAN), wide area networks (WAN), infrared, radio, WiFi, point-to-point (P2P) networks, telecommunication networks, cloud communication, and the like. Optionally, relay stations, such as towers, satellites, or mobile stations, can be used. Wireless communications can be proximity dependent or proximity independent. In some embodiments, line-of-sight may or may not be required for communications. The communication module 1910 can transmit and/or receive one or more of sensing data from the sensing module 1902, processing results produced by the processing unit 1904, predetermined control data, user commands from a terminal or remote controller, and the like.

The components of the system 1900 can be arranged in any suitable configuration. For example, one or more of the components of the system 1900 can be located on the movable object, carrier, payload, terminal, sensing system, or an additional external device in communication with one or more of the above. Additionally, although FIG. 20 depicts a single processing unit 1904 and a single non-transitory computer readable medium 1906, one of skill in the art would appreciate that this is not intended to be limiting, and that the system 1900 can include a plurality of processing units and/or non-transitory computer readable media. In some embodiments, one or more of the plurality of processing units and/or non-transitory computer readable media can be situated at different locations, such as on the movable object, carrier, payload, terminal, sensing module, additional external device in communication with one or more of the above, or suitable combinations thereof, such that any suitable aspect of the processing and/or memory functions performed by the system 1900 can occur at one or more of the aforementioned locations.

While preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims be covered thereby.

## Claims

1. An unmanned aerial vehicle (UAV), comprising:
one or more propulsion units (120, 210) configured to generate lift for the UAV;
a central body (102, 202) comprising a first body portion (204) and a second body portion (206), wherein the first body portion (204) is configured to move translationally relative to the second body portion (206) to transform the central body (102, 202) between a first configuration and a second configuration; and
a plurality of arms (110, 208) extending away from the central body (102, 202), each of the plurality of arms (110, 208) being configured to couple to one or more of the propulsion units (120, 210), wherein the plurality of arms (110, 208) comprises a first plurality of arms (110, 208) and a second plurality of arms (110, 208), wherein the first plurality of arms (110, 208) extends from the first body portion (204) and the second plurality of arms (110, 208) extends from the second body portion (206) wherein
in the first configuration, the first body portion (204) is positioned above the second body portion (206) of the unmanned aerial vehicle such that all portions of the first body portion (204) are being above all portions of the second body portion (206).

2. The UAV of claim 1, wherein, in at least one of the first configuration and the second configuration, the first body portion (204) comprises at least a length in a first plane and the second body portion (206) comprises at least a length in a second plane different from and parallel to the first plane.

3. The UAV of claim 1, wherein at least one of the first body portion (204) and the second body portion (206) comprises a rail (250) on at least one of a top, bottom and side surface, the rail (250) being configured to guide movement of the first body portion (204) relative to the second body portion (206).

4. The UAV of claim 1, wherein at least one of the first body portion (204) and the second body portion (206) comprises at least one locking mechanism configured to maintain the central body (102, 202) in the first configuration or the second configuration.

5. The UAV of claim 1, wherein, in the first configuration, the first body portion (204) comprises at least a portion that is above and to a side of at least a portion of the second body portion (206).

6. The UAV of claim 1, wherein at least one of the first body portion (204) and the second body portion (206) are configured to move in a direction parallel to a roll axis of the UAV to transform the UAV from the first configuration to the second configuration.

7. The UAV of claim 1, wherein the second configuration is an expanded configuration, and wherein the central body (102, 202) is configured to provide an additional storage space in the second configuration, the additional storage space being absent in the first configuration.

8. A method of operating an unmanned aerial vehicle (UAV), comprising:
providing a central body (102, 202) having a first body portion (204) and a second body portion (206);
transforming the UAV between a first configuration and a second configuration, wherein the transforming comprises translationally displacing the first body portion (204) of the central body (102, 202) relative to the second body portion (206) of the central body (102, 202), wherein in the first configuration, the first body portion (204) is positioned above the second body portion (206) of the unmanned aerial vehicle such that all portions of the first body portion (204) are being above all portions of the second body portion (206); and
providing a plurality of arms (110, 208), each arm extending away from the central body (102, 202) and being for coupling to at least one propulsion unit (120, 210) configured to generate lift for the UAV , wherein the plurality of arms (110, 208) comprises a first plurality of arms (110, 208) and a second plurality of arms (110, 208), wherein the first plurality of arms (110, 208) extends from the first body portion (204) and the second plurality of arms (110, 208) extends from the second body portion (206).

9. The method of claim 8, further comprising receiving an indication signal comprising instructions to transform the UAV, and wherein transforming the UAV is performed in response to receiving the indication signal.

## Patentansprüche

1. Unbemanntes Luftfahrzeug (UAV), das Folgendes umfasst:
eine oder mehrere Antriebseinheiten (120, 210), die dazu ausgelegt sind, ein Anheben für das UAV zu erzeugen;
einen zentralen Körper (102, 202), der einen ersten Körperabschnitt (204) und einen zweiten Körperabschnitt (206) umfasst, wobei der erste Körperabschnitt (204) dazu ausgelegt ist, sich relativ zum zweiten Körperabschnitt (206) translatorisch zu bewegen, um den zentralen Körper (102, 202) zwischen einer ersten Auslegung und einer zweiten Auslegung umzuwandeln; und
eine Vielzahl von Armen (110, 208), die sich vom zentralen Körper (102, 202) weg erstrecken, wobei jede Vielzahl von Armen (110, 208) dazu ausgelegt ist, an eine oder mehrere der Antriebseinheiten (120, 210) zu koppeln, wobei die Vielzahl von Armen (110, 208) eine erste Vielzahl von Armen (110, 208) und eine zweite Vielzahl von Armen (110, 208) umfasst, wobei sich die erste Vielzahl von Armen (110, 208) vom ersten Körperabschnitt (204) erstreckt und sich die zweite Vielzahl von Armen (110, 208) vom zweiten Körperabschnitt (206) erstreckt, wobei
der erste Körperabschnitt (204) in der ersten Auslegung über dem zweiten Körperabschnitt (206) des unbemannten Luftfahrzeugs positioniert ist, derart, dass sich alle Abschnitte des ersten Körperabschnitts (204) über allen Abschnitten des zweiten Körperabschnitts (206) befinden.

2. UAV nach Anspruch 1, wobei der erste Körperabschnitt (204) mindestens in einer der ersten Auslegung und der zweiten Auslegung mindestens eine Länge in einer ersten Ebene umfasst und der zweite Körperabschnitt (206) mindestens eine Länge in einer zweiten Ebene umfasst, die sich von der ersten Ebene unterscheidet und parallel zu derselben verläuft.

3. UAV nach Anspruch 1, wobei mindestens einer des ersten Körperabschnitts (204) und des zweiten Körperabschnitts (206) auf mindestens einer einer oberen, einer unteren und einer Seitenfläche eine Schiene (250) umfasst, wobei die Schiene (250) dazu ausgelegt ist, eine Bewegung des ersten Körperabschnitts (204) relativ zum zweiten Körperabschnitt (206) zu führen.

4. UAV nach Anspruch 1, wobei mindestens einer des ersten Körperabschnitts (204) und des zweiten Körperabschnitts (206) mindestens einen Verriegelungsmechanismus umfasst, der dazu ausgelegt ist, den zentralen Körper (102, 202) in der ersten Auslegung oder der zweiten Auslegung zu halten.

5. UAV nach Anspruch 1, wobei der erste Körperabschnitt (204) in der ersten Auslegung mindestens einen Abschnitt umfasst, der sich über mindestens einem Abschnitt des zweiten Körperabschnitts (206) und auf einer Seite von demselben befindet.

6. UAV nach Anspruch 1, wobei mindestens einer des ersten Körperabschnitts (204) und des zweiten Körperabschnitts (206) dazu ausgelegt sind, sich in eine Richtung parallel zu einer Rollachse des UAV zu bewegen, um das UAV von der ersten Auslegung in die zweite Auslegung umzuwandeln.

7. UAV nach Anspruch 1, wobei die zweite Auslegung eine ausgedehnte Auslegung ist und wobei der zentrale Körper (102, 202) dazu ausgelegt ist, in der zweiten Auslegung einen zusätzlichen Stauraum bereitzustellen, wobei der zusätzliche Stauraum in der ersten Auslegung fehlt.

8. Verfahren zum Betreiben eines unbemannten Luftfahrzeugs (UAV), das Folgendes umfasst:
Bereitstellen eines zentralen Körpers (102, 202) mit einem ersten Körperabschnitt (204) und einem zweiten Körperabschnitt (206);
Umwandeln des UAV zwischen einer ersten Auslegung und einer zweiten Auslegung, wobei das Umwandeln das translatorische Versetzen des ersten Körperabschnitts (204) des zentralen Körpers (102, 202) relativ zum zweiten Körperabschnitt (206) des zentralen Körpers (102, 202) umfasst, wobei der erste Körperabschnitt (204) in der ersten Auslegung über dem zweiten Körperabschnitt (206) des unbemannten Luftfahrzeugs positioniert ist, derart, dass sich alle Abschnitte des ersten Körperabschnitts (204) über allen Abschnitten des zweiten Körperabschnitts (206) befinden; und
Bereitstellen einer Vielzahl von Armen (110, 208), wobei sich jeder Arm vom zentralen Körper (102, 202) weg erstreckt und dem Koppeln an mindestens eine Antriebseinheit (120, 210) dient, die dazu ausgelegt ist, ein Anheben für das UAV zu erzeugen, wobei die Vielzahl von Armen (110, 208) eine erste Vielzahl von Armen (110, 208) und eine zweite Vielzahl von Armen (110, 208) umfasst, wobei sich die erste Vielzahl von Armen (110, 208) vom ersten Körperabschnitt (204) erstreckt und sich die zweite Vielzahl von Armen (110, 208) vom zweiten Körperabschnitt (206) erstreckt.

9. Verfahren nach Anspruch 8, das ferner das Empfangen eines Anzeigesignals umfasst, das Anweisungen zum Umwandeln des UAV umfasst, und wobei das Umwandeln des UAV in Reaktion auf das Empfangen des Anzeigesignals durchgeführt wird.

## Revendications

1. Aéronef sans pilote (UAV) comprenant :
une ou plusieurs unités de propulsion (120, 210) configurées pour générer la portance pour le UAV ;
un corps central (102, 202) comprenant une première partie de corps (204) et une seconde partie de corps (206), dans lequel la première partie de corps (204) est configurée pour se déplacer par translation par rapport à la seconde partie de corps (206) afin de transformer le corps central (102, 202) entre une première configuration et une seconde configuration ; et
une pluralité de bras (110, 208) s'étendant à l'opposé du corps central (102, 202), chacun de la pluralité de bras (110, 208) étant configuré pour se coupler à une ou plusieurs des unités de propulsion (120, 210), dans lequel la pluralité de bras (110, 208) comprend une première pluralité de bras (110, 208) et une seconde pluralité de bras (110, 208), dans lequel la première pluralité de bras (110, 208) s'étend à partir de la première partie de corps (204) et la seconde pluralité de bras (110, 208) s'étend à partir de la seconde partie de corps (206), dans lequel :
dans la première configuration, la première partie de corps (204) est positionnée au-dessus de la seconde partie de corps (206) de l'aéronef sans pilote de sorte que toutes les parties de la première partie de corps (204) sont au-dessus de toutes les parties de la seconde partie de corps (206).

2. UAV selon la revendication 1, dans lequel, dans au moins l'une parmi la première configuration et la seconde configuration, la première partie de corps (204) comprend au moins une longueur dans un premier plan et la seconde partie de corps (206) comprend au moins une longueur dans un second plan différent de et parallèle au premier plan.

3. UAV selon la revendication 1, dans lequel au moins l'une parmi la première partie de corps (204) et la seconde partie de corps (206) comprend un rail (250) sur au moins l'une parmi une partie supérieure, une partie inférieure et une surface latérale, le rail (250) étant configuré pour guider le mouvement de la première partie de corps (204) par rapport à la seconde partie de corps (206).

4. UAV selon la revendication 1, dans lequel au moins l'une parmi la première partie de corps (204) et la seconde partie de corps (206) comprend au moins un mécanisme de verrouillage configuré pour maintenir le corps central (102, 202) dans la première configuration ou la seconde configuration.

5. UAV selon la revendication 1, dans lequel, dans la première configuration, la première partie de corps (204) comprend au moins une partie qui est au-dessus et sur un côté d'au moins une partie de la seconde partie de corps (206).

6. UAV selon la revendication 1, dans lequel au moins l'une parmi la première partie de corps (204) et la seconde partie de corps (206) est configurée pour se déplacer dans une direction parallèle à un axe de roulis du UAV pour faire passer le UAV de la première configuration à la seconde configuration.

7. UAV selon la revendication 1, dans lequel la seconde configuration est une configuration expansée, et dans lequel le corps central (102, 202) est configuré pour fournir un espace de stockage supplémentaire dans la seconde configuration, l'espace de stockage supplémentaire étant absent dans la première configuration.

8. Procédé pour actionner un aéronef sans pilote (UAV) comprenant les étapes consistant à :
prévoir un corps central (102, 202) ayant une première partie de corps (204) et une seconde partie de corps (206) ;
transformer le UAV entre une première configuration et une seconde configuration, dans lequel la transformation comprend l'étape consistant à déplacer, par translation, la première partie de corps (204) du corps central (102, 202) par rapport à la seconde partie de corps (206) du corps central (102, 202), dans lequel, dans la première configuration, la première partie de corps (204) est positionnée au-dessus de la seconde partie de corps (206) de l'aéronef sans pilote de sorte que toutes les parties de la première partie de corps (204) sont au-dessus de toutes les parties de la seconde partie de corps (206) ; et
prévoir une pluralité de bras (110, 208), chaque bras s'étendant à l'opposé du corps central (102, 202) et étant prévu pour se coupler à au moins une unité de propulsion (120, 210) configurée pour générer la portance pour le UAV, dans lequel la pluralité de bras (110, 208) comprend une première pluralité de bras (110, 208) et une seconde pluralité de bras (110, 208), dans lequel la première pluralité de bras (110, 208) s'étend à partir de la première partie de corps (204) et la seconde pluralité de bras (110, 208) s'étend à partir de la seconde partie de corps (206).

9. Procédé selon la revendication 8, comprenant en outre l'étape consistant à recevoir un signal d'indication comprenant des instructions pour transformer le UAV, et dans lequel la transformation du UAV est réalisée en réponse à la réception du signal d'indication.
